# EUROPÄISCHE PATENTSCHRIFT

(11) **EP 2 511 783 B1**
(45) Veröffentlichungstag und Bekanntmachung des Hinweises auf die Patenterteilung: **27.05.2015**
(21) Anmeldenummer: 11163534.8
(22) Anmeldetag: 21.04.2011
(51) Int. Cl.: G05D 16/10, G05D 7/01, B05B 1/30, B05B 12/00, B05B 15/02, B05B 12/08

(54) **Agrarspritzen-Überströmventil**
Agricultural spraying overflow valve
Soupape de décharge pour seringues agricoles

(30) Priorität: 24.02.2011 DE 102011000921
(43) Veröffentlichungstag der Anmeldung: 17.10.2012
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- US-A- 3 951 379
- US-A1- 2009 301 580
- US-A1- 2011 155 252

## Beschreibung

### TECHNISCHES GEBIET DER ERFINDUNG

Die Erfindung betrifft ein Agrarspritzen-Überströmventil gemäß dem Oberbegriff des Patentanspruchs 1. Weiterhin betrifft die Erfindung eine Feldspritzeinrichtung mit einem derartigen Agrarspritzen-Überströmventil.

Agrarspritzen-Ventile dienen grundsätzlich der Beeinflussung der Ausbringrate einer Agrarspritze beliebigen Einsatzzwecks und beliebiger Bauart. Beispielsweise dient eine Agrarspritze dem Ausbringen eines Fluids in der Landwirtschaft oder dem Obst- oder Gemüseanbau, wobei es sich bei dem Fluid beispielsweise um Wasser, Dünger, ein Insektizid oder ein beliebiges anderes Fluid oder Fluidgemisch handeln kann. Eine Agrarspritze kann einzeln Einsatz finden zur Ausbringung eines agraren Fluids auf eine begrenzte Fläche. Ebenfalls möglich ist, dass eine Vielzahl von Agrarspritzen simultan betrieben werden, die beispielsweise an einem oder mehreren so genannten Sprühbalken eines Traktors oder eines anderweitigen landwirtschaftlichen Fahrzeugs gehalten sein können. In diesem Fall kann jeweils einer Agrarspritze ein Agrarspritzen-Ventil zugeordnet sein. Ebenfalls möglich ist, dass ein Agrarspritzen-Ventil einer Gruppe von Agrarspritzen zugeordnet ist.

Grundsätzlich zu unterscheiden sind Agrarspritzen-Ventile mit *aktiver Steuerung* einerseits und passiver Steuerung andererseits. Unter einer aktiven Steuerung im Sinne der vorliegenden Patentanmeldung wird ein Agrarspritzen-Ventil verstanden, welches extern derart angesteuert ist, dass nach Maßgabe eines externen Steuersignals das Agrarspritzen-Ventil von einer Öffnungsstellung in eine Schließstellung (und umgekehrt) geschaltet werden kann. Gegebenenfalls kann ein derartiges Agrarspritzen-Ventil auch Zwischenstellungen aufweisen. Somit kann ein aktiv gesteuertes Agrarspritzen-Ventil aktiv in Abhängigkeit eines Steuersignals die Ausbringrate einer Agrarspritze beeinflussen.

Im Gegensatz zu einem derartigen aktiv gesteuerten Agrarspritzen-Ventil betrifft die Erfindung ein Agrarspritzen-Ventil mit *passiver Steuerung,* bei welcher der Betriebszustand des Agrarspritzen-Ventils ausschließlich von den Druckverhältnissen an der Primärleitung und der Sekundärleitung des Agrarspritzen-Ventils abhängig ist, nicht jedoch von einem Steuersignal abhängig ist.

Von derartigen passiven Agrarspritzen-Ventilen betrifft die Erfindung eine besondere Ausgestaltungsform, nämlich ein Agrarspritzen-Überströmventil, welches in Abhängigkeit eines Drucks in der Primärleitung eine Öffnungs- und eine Schließstellung (und unter Umständen auch mindestens eine Zwischenstellung) einnimmt.

### STAND DER TECHNIK

Gattungsgemäße Agrarspritzen-Überströmventile können vereinfacht als Rückschlagventile bezeichnet werden, die mit sich vergrößerndem Druck in der Primärleitung eine Öffnungsstellung einnehmen, wobei der für die Herbeiführung der Öffnungsstellung erforderliche Öffnungsdruck von der wirksamen Kolbenfläche des Rückschlagventils und der das Rückschlagventil beaufschlagenden Feder abhängig ist. Derartige Überström- oder Rückschlagventile können mindestens einer Agrarspritze vorgeordnet sein oder in eine Agrarspritze integriert sein.

Die nicht vorveröffentlichte Patentanmeldung DE 10 2010 001 881.3-23 der Anmelderin beschreibt ein Agrarspritzen-Ventil mit *aktiver Steuerung* durch ein Magnetventil, vorzugsweise in Ausbildung als 2/2-Wegeventil und Sperrventil oder als 3/2-Wegeventil. Dieses Agrarspritzen-Ventil verfügt über einen Wiegekolben, welcher auf einer Kolbenseite mit einem gehäusefesten Ventilsitz zusammenarbeitet zur Öffnung und Schließung eines Übertrittsquerschnitts zwischen einer Primärleitung und einer Sekundärleitung. Auf dieser Kolbenseite wirken die Drücke in der Primärleitung sowie Sekundärleitung jeweils auf eine Kolbenfläche in dieselbe Richtung auf den Wiegekolben ein. Auf der gegenüberliegenden Kolbenseite des Wiegekolbens wirken ein über das Magnetventil gesteuerter Steuerdruck und eine Druckfeder. In der Schließstellung des Magnetventils entspricht der Steuerdruck (unter Umständen unter ergänzender Drosselwirkung) dem Druck in der Primärleitung. Dieser erhöhte Steuerdruck in Ergänzung durch die Druckfeder hat zur Folge, dass die Kräfte auf dieser Kolbenseite gegenüber den Kräften auf der anderen Kolbenseite des Wiegekolbens überwiegen, so dass der Übertrittsquerschnitt zwischen der Primärleitung und der Sekundärleitung geschlossen ist. Wird hingegen das Magnetventil in seine Öffnungsstellung überführt, wird als Steuerdruck der Druck in der Sekundärleitung verwendet, welcher gegenüber dem Steuerdruck in der Schließstellung des Magnetventils verringert ist. Dies hat zur Folge, dass ein Übertrittsquerschnitt zwischen der Primärleitung und der Sekundärleitung geöffnet wird.

Weiterer nicht gattungsbildender Stand der Technik mit Agrarspritzen-Ventilen mit aktiver Steuerung ist aus DE 10 2009 001 532, DE 696 25 914 T2 und DE 10 2006 008 612 A1 bekannt.

US 3,951,379 A offenbart ein Ventil für ein Bewässerungssystem, bei welchem das unter Druck stehende, auszubringende Fluid nach oben über V-förmig auseinander orientierte Düsen ausgebracht werden soll. Ein Gehäuse des Ventils bildet mit einer Schulter einen Ventilsitz aus. Unterhalb der Schulter ist in einer von dem Gehäuse ausgebildeten Nut ein elastischer Ring angeordnet. Ein Ventilteller, welcher in einer Schließstellung des Ventils unter Abdichtung zur Anlage an den Ventilsitz kommt, erstreckt sich mit einem Ventilstößel durch den Ventilsitz und unter Ausbildung eines Ringspaltes durch die Innenbohrung des elastischen Rings hindurch. Der Ventilstößel trägt in seinem dem Ventilteller abgewandten Endbereich einen Federteller. Eine Vorspannfeder, deren einer Federfußpunkt am Gehäuse des Ventils abgestützt ist und deren anderer Federfußpunkt an dem Federteller abgestützt ist, beaufschlagt den Ventilteller in die Schließstellung. Mit zunehmendem Druck des Wassers in einer Primärleitung wirkt auf den Ventilteller eine zunehmende fluidische Kraft in Öffnungsrichtung, bis ein Schwellwert des Drucks erreicht ist, welcher ausreichend ist, um die Vorspannung der Vorspannfeder zu überwinden und das Ventil zu öffnen, indem sich der Ventilteller von dem Ventilsitz weg bewegt. Je nach Druck und Durchfluss des Ventils erfolgt zusätzlich eine Verformung des elastischen Rings, womit eine von dem Ringspalt bewirkte Drosselwirkung in dem Ventil abhängig vom Druck und Durchfluss veränderbar ist.

Die Druckschrift US 2009/0301580 A1 offenbart ein Ventil, welches Einsatz findet in Wasserleitungen von Sanitärinstallationen, Kühlleitungen, hydraulischen Leitungen von Bremssystemen und Sprayeinrichtungen. Hier findet ein Doppelventilkörper Einsatz, welcher unter Beaufschlagung durch eine Feder zwischen zwei Ventilsitzen verschiebbar ist. Ohne anliegenden Druck nimmt das Ventil eine Schließstellung ein, in welcher der Doppelventilkörper an dem ersten Ventilsitz anliegt. Mit Überschreiten eines Schwellwerts des Drucks bewegt sich der Doppelventilkörper von dem ersten Ventilsitz weg und nimmt eine Stellung ein, in welcher dieser beabstandet von beiden Ventilsitzen angeordnet ist, so dass ein Durchfluss des Ventils möglich ist. Je nach den vorliegenden Druckverhältnissen ändert sich der Abstand des Ventilkörpers von den beiden genannten Ventilsitzen, womit angestrebt wird, den Fluss durch das Ventil unabhängig von den Druckverhältnissen weitestgehend konstant zu halten.

### AUFGABE DER ERFINDUNG

Der Erfindung liegt die Aufgabe zugrunde, ein passiv gesteuertes Agrarspritzen-Überströmventil oder ein Agrarspritzen-Überströmventil mit passiv gesteuerter Überströmfunktion und ggf. zusätzlichen weiteren aktiven Ventilelementen mit einem erweiterten Funktionsumfang vorzuschlagen. Insbesondere soll das Agrarspritzen-Überströmventil hinsichtlich
- einer Vermeidung einer Leckage,
- einer integrierten Druckwächterfunktion,
- einer integrierten Durchflussüberwachungsfunktion und/oder
- der sensorischen Erfassung eines Betriebszustands
verbessert werden. Eine weitere der der Erfindung zugrunde liegende Aufgabe betrifft die Verbesserung einer Feldspritzeinrichtung mit einem Agrarspritzen-Überströmventil.

### LÖSUNG

Die Aufgabe der Erfindung wird erfindungsgemäß mit den Merkmalen der unabhängigen Patentansprüche gelöst. Weitere Ausgestaltungen der Erfindungen ergeben sich entsprechend den abhängigen Patentansprüchen.

### BESCHREIBUNG DER ERFINDUNG

Bei dem erfindungsgemäßen Agrarspritzen-Überströmventil erfolgt eine passive Steuerung des Volumenstroms eines auszubringenden agraren Fluids von einer Primärleitung zu einer Sekundärleitung über die passive Steuerung eines Übertrittsquerschnitts zwischen der Primärleitung und der Sekundärleitung. Hierbei ist die Größe und/oder die Geometrie des Übertrittsquerschnitts von der Stellung eines Ventilkörpers des Agrarspritzen-Überströmventils abhängig. Es kann sich hierbei um eine ausschließliche passive Steuerung handeln. Möglich ist aber auch, dass zusätzliche konstruktive Maßnahmen getroffen sind und Bauelemente vorgesehen sind für eine ergänzende aktive Steuerung, beispielsweise durch dem Agrarspritzen-Überströmventil vorgeordnete oder nachgeordnete oder aber in dieses integrierte aktive Ventilelemente.

Unter einem derart passiv gesteuerten "Übertrittsquerschnitt" kann im Sinne der vorliegenden Erfindung die Steuerung der wirksamen Querschnittsfläche des Übertrittsquerschnitts verstanden werden. In bevorzugter Ausgestaltung erfolgt allerdings die Steuerung eines verallgemeinerten Übertrittsquerschnitts, womit auch eine Veränderung einer Übertrittsgeometrie, einer Länge eines Übertrittskanals, einer Drosselgeometrie und/oder der begrenzenden Konturen eines Strömungskanals gemeint sein können.

Erfindungsgemäß ist der Ventilkörper mit einem "Wiegekolben" gebildet. Hierbei besitzt der Ventilkörper eine erste Kolbenfläche, die permanent mit dem Druck in der Primärleitung beaufschlagt ist. Weiterhin besitzt der Ventilkörper eine entgegengesetzt zu der ersten Kolbenfläche wirkende zweite Kolbenfläche, die permanent mit dem Druck in der Sekundärleitung beaufschlagt ist. Durch den erfindungsgemäßen Einsatz eines Wiegekolbens ist die Stellung des Ventilkörpers nicht lediglich von dem Druck in der Primärleitung abhängig - vielmehr hängt die Stellung des Ventilkörpers und damit die Größe und/oder Geometrie des Übertrittsquerschnitts (zumindest bereichsweise) von einem Differenzdruck in der Primärleitung und der Sekundärleitung ab.

Um lediglich einige nicht beschränkende Beispiele zu nennen, kann das erfindungsgemäße Agrarspritzen-Überströmventil folgende Funktionen gewährleisten:
- Für die Inbetriebnahme der Agrarspritze wird in einer Primärleitung, beispielsweise über eine Druckquelle wie eine Pumpe, ein Druck erzeugt, während für offene Agrarspritze in der Sekundärleitung der Umgebungsdruck wirkt. Der steigende Druck an der ersten Kolbenfläche hat zur Folge, dass das Agrarspritzen-Überstromventil öffnet, so dass das auszubringende Fluid unter dem Förderdruck von der Primärleitung über den geschaffenen Übertrittsquerschnitt zu der Sekundärleitung übertreten kann und von dort über die Agrarspritze ausgebracht wird.
- Kommt es im Betrieb der Agrarspritze im Folgenden zu einer unerwünschten Verstopfung stromabwärts des Agrarspritzen-Überströmventils, beispielsweise durch Verstopfung einer Düse einer Agrarspritze, staut sich das Fluid in der Sekundärleitung auf, was zur Folge hat, dass der Druck in der Sekundärleitung ansteigt, womit auch der die zweite Kolbenfläche beaufschlagende Druck ansteigt. Durch geeignete Dimensionierung der Kolbenflächen des Wiegekolbens (und zusätzlicher etwaiger auf den Ventilkörper einwirkender Federn) kann ein Schwellwert für den Druck an der zweiten Kolbenfläche vorgegeben werden, mit dessen Überschreiten der Wiegekolben und der mit diesem gekoppelte Ventilkörper automatisiert ihre Stellung verändern. Diese Veränderung der Stellung kann erfindungsgemäß vorteilhaft ausgenutzt werden, beispielsweise um die Stellung des Wiegekolbens oder Ventilkörpers auf automatisierte Weise auszuwerten für eine automatisierte Detektion eines nicht ordnungsgemäß funktionierenden Systems, insbesondere einer verstopften Düse der Agrarspritze. Um lediglich ein weiteres mögliches Beispiel zu nennen, kann die Veränderung der Stellung des Ventilkörpers genutzt werden, um automatisiert das Agrarspritzen-Überströmventil zu schließen, um einen weiteren Übertritt von Fluid von der Primärleitung in die Sekundärleitung zu unterbinden, wenn das System nicht ordnungsgemäß funktioniert, insbesondere eine Düse der Agrarspritze verstopft ist.

Erfindungsgemäß ist das Agrarspritzen-Überströmventil mit einem Sensor ausgestattet sein, der die Position des Ventilkörpers erfasst. Hierbei kann der Sensor als Schalter ausgebildet sein, welcher beispielsweise ein binäres Signal erzeugt je nachdem, welche Betriebsstellung (bspw. "Offen", "Geschlossen", ggf. auch "teilweise Offen" oder "Zwischenstellung") oder welchen Betriebsstellungsbereich der Ventilkörper einnimmt. Ebenfalls möglich ist, dass der Sensor ein kontinuierliches Signal entsprechend der kontinuierlichen möglichen Position des Ventilskörpers erzeugt. Möglich ist auch, dass das Agrarspritzen-Überströmventil unmittelbar das Signal des Sensors über eine geeignete Schnittstelle an seine Umgebung übergibt, wobei über diese Schnittstelle auch eine Leistungsversorgung des Sensors möglich sein kann. Weiterhin möglich ist, dass in das Agrarspritzen-Überströmventil bereits eine CPU integriert ist, welche das Signal des Sensors zur Erfassung der Position des Ventilkörpers verarbeitet, aufbereitet und in veränderter Form weitergeben kann, beispielsweise über die zuvor genannte Schnittstelle.

Die erfindungsgemäß einsetzbaren Geometrien des Übertrittsquerschnitts sowie deren Größen können beliebig sein mit hierdurch konstruktiv vorgegebenen Strömungsbedingungen zwischen der Primärleitung und der Sekundärleitung in Abhängigkeit von der jeweiligen Stellung des Ventilkörpers. Für eine besondere Ausgestaltung der Erfindung ist (zumindest für eine Stellung des Ventilkörpers) der Übertrittsquerschnitt zwischen der Primärleitung und der Sekundärleitung von einer Drossel gebildet. Über die Drossel kann das Strömungsverhalten von der Primärleitung zu der Sekundärleitung beeinflusst werden. Um lediglich ein Beispiel zu nennen, kann über die Drossel der Druckausgleich über den Übertrittsquerschnitt zwischen der Primärleitung und der Sekundärleitung verzögert werden. Auch möglich ist die Beeinflussung der Druckverhältnisse an der ersten Kolbenfläche, also einer Primärseite des Wiegekofbens, und der zweiten Kolbenfläche, also einer Sekundärseite des Wiegekolbens, durch die Drossel. Schließlich kann über den Einsatz einer Drossel eine Beeinflussung der Stellung des Ventilkörpers bzw. des Wiegekolbens in Abhängigkeit von einer Durchflussgeschwindigkeit des Fluids erfolgen. Weiterhin schlägt die Erfindung vor, dass die Charakteristik der Drossel, insbesondere die Größe und/oder die Geometrie der Drossel, von der Stellung des Ventilkörpers abhängig ist.

Von Vorteil kann sein, wenn gemäß einer weiteren Ausgestaltung der Erfindung die Kontur des Übertrittsquerschnitts oder der Drossel auch durch den Ventilkörper oder Wiegekolben begrenzt ist, wobei vorzugsweise die Kontur des Übertrittsquerschnitts einerseits von dem Ventilkörper oder Wiegekolben (bspw. radial innenliegend) und andererseits von einem Gehäuse oder Gehäuseeinsatz (bspw. radial außenliegend) begrenzt ist.

Möglich ist eine beliebige technische Ausgestaltung des Agrarspritzen-Überströmventils, insbesondere in Ausgestaltung als Sitzventil oder Schieberventil, wobei das Ventil zwei oder mehr diskrete Stellungen besitzen kann oder auch kontinuierlich seinen Betriebszustand verändern kann. Für eine besonders einfache Ausgestaltung besitzt das Agrarspritzen-Überströmventil eine Schließstellung, in der die Primärleitung gegenüber der Sekundärleitung abgesperrt ist. In dieser Stellung kann beispielsweise eine Leckage von Fluid aus der dem Agrarspritzen-Überströmventil nachgeordneten Agrarspritze vermieden werden. Darüber hinaus kann das Agrarspritzen-Überströmventil eine Öffnungsstellung besitzen, in der die Primärleitung über einen Öffnungsquerschnitt mit der Sekundärleitung verbunden ist.

Für einen weiteren Vorschlag der Erfindung besitzt das Agrarspritzen-Überströmventil aber zusätzlich zu der genannten Schließstellung, in der die Primärleitung gegenüber der Sekundärleitung abgesperrt ist, mindestens eine erste Öffnungsstellung sowie eine zweite Öffnungsstellung. In der ersten Öffnungsstellung ist die Primärleitung über einen ersten Öffnungsquerschnitt mit der Sekundärleitung verbunden. In der zweiten Öffnungsstellung ist die Primärleitung über einen zweiten Öffnungsquerschnitt mit der Sekundärleitung verbunden. In dieser Ausgestaltung der Erfindung ist der zweite Öffnungsquerschnitt größer als der erste Öffnungsquerschnitt. Für die Ausgestaltung der Erfindung erfolgt die Umschaltung von der ersten Öffnungsstellung zu der zweiten Öffnungsstellung infolge des Wiegekolbens mit einer Vergrößerung des Differenzdrucks zwischen der Primärleitung und der Sekundärleitung. Mit einer sukzessiven Vergrößerung des Differenzdrucks zwischen der Primärleitung und der Sekundärleitung nimmt somit automatisiert das Agrarspritzen-Überströmventil aus der anfänglichen Schließstellung zunächst die erste Öffnungsstellung, in welcher mit einem begrenzten Fluidstrom Fluid in die Sekundärleitung übertritt, ein. Mit einer weiteren Vergrößerung des Differenzdrucks wird dann die zweite Öffnungsstellung eingenommen, in der dann ein vergrößerter oder der volle Fluidstrom zu der Sekundärleitung übertritt, womit unter Umständen die nachgeordnete Agrarspritze ihren Soll-Arbeitsbereich erreichen kann. Hierbei können die Übertrittsquerschnitte in der ersten Öffnungsstellung und der zweiten Öffnungsstellung beliebige Konturen, Geometrien, Charakteristiken und Größen besitzen. Um lediglich ein Beispiel zu nennen, kann in der ersten Öffnungsstellung der Übertrittsquerschnitt mit einer Drossel ausgebildet sein. Es versteht sich, dass zusätzlich zu der genannten Schließstellung und den beiden Öffnungsstellungen auch beliebige weitere Stellungen oder Zwischenstellungen möglich sind.

In besonderer Ausgestaltung ist der erste Öffnungsquerschnitt, unter Umständen auch eine mit dem ersten Öffnungsquerschnitt gebildete Drossel, hohlzylinderförmig ausgebildet, wobei vorzugsweise der hohlzylinderförmige Öffnungsquerschnitt radial innenliegend von dem Ventilkörper begrenzt ist, während dieser radial außenliegend von dem Gehäuse oder einem Gehäuseeinsatz begrenzt ist. In alternativer Ausgestaltung ist der erste Öffnungsquerschnitt nicht hohlzylinderförmig, also in eine Umfangsrichtung zu der Strömungsrichtung umlaufend, ausgebildet. Vielmehr kann für diese alternative Ausführungsform der erste Öffnungsquerschnitt in der Art eines Strömungskanals ausgebildet sein. In diesem Fall kann der Strömungskanal von einer Nut in dem Ventilkörper (bzw. in einem Gehäuse oder Gehäuseeinsatz) begrenzt sein, während eine andere Begrenzungsfläche dann von dem Gehäuse (bzw. dem Ventilkörper) begrenzt sein kann.

In weiterer Ausgestaltung der Erfindung ist die Länge des hohlzylinderförmigen ersten Öffnungsquerschnitts, des Strömungskanals oder der Drossel in Abhängigkeit des Differenzdrucks zwischen der Primärleitung und der Sekundärleitung veränderbar. Um hier lediglich ein Beispiel zu nennen, kann der hohlzylinderförmige Öffnungsquerschnitt gebildet sein zwischen einer zylindrischen Mantelfläche des Ventilkörpers mit begrenzter Länge sowie zylinderförmiger Innenfläche einer Bohrung eines Gehäuses oder Gehäuseeinsatzes. Die maximale Länge des hohlzylinderförmigen Öffnungsquerschnitts ergibt sich bei vollständiger Überdeckung der beiden genannten zylinderförmigen Flächen, während mit der Verschiebung des Ventilkörpers und verringerter Überdeckung der zylinderförmigen Flächen die Länge des wirksamen hohlzylinderförmigen Übertrittsquerschnitts kleiner wird, während abseits der Überdeckung größere Öffnungsquerschnitte zur Wirkung kommen. Entsprechendes gilt natürlich auch für den Einsatz eines Strömungskanals.

Möglich ist natürlich, dass das Agrarspritzen-Überströmventil unmittelbar öffnet, wenn sich ein Differenzdruck zwischen der Primärleitung und der Sekundärleitung ergibt mit einem Druckgefälle in Richtung der Sekundärleitung, womit das Agrarspritzen-Überströmventil vor allem eine Art Rückschlagventil bildet, welches ein Rückströmen von Fluid von der Sekundärleitung in die Primärleitung unterbindet. In weiterer Ausgestaltung der Erfindung verbleibt das Agrarspritzen-Überströmventil allerdings in der Schließstellung, bis ein Schwellenwert eines Differenzdrucks zwischen der Primärleitung und der Sekundärleitung mit einem Druckgefälle in Richtung der Sekundärleitung überschritten wird. Dies bedeutet insbesondere, dass das Agrarspritzen-Überströmventil eine zusätzliche Funktion, nämlich einen Tropf- oder Auslaufschutz, erfüllt. Wird bspw. mit einer gewünschten Beendigung der Ausbringung des Fluids eine Pumpe abgeschaltet, bleibt ein (unter Umständen mit der Zeit abfallender) Restdruck in dem System vorhanden. Würde das Agrarspritzen-Überströmventil erst seine Schließstellung erreichen, wenn der Druck in der Primärleitung auf Null abgefallen ist, hätte dies zur Folge, dass bis zum vollständigen Druckabbau in dem System unerwünscht Fluid zu der Sekundärleitung übertreten würde und aus der nachgeordneten Agrarspritze austreten würde. Dies führt zu einer Erhöhung der ausgebrachten Fluidmenge, welche letztendlich erhöhte Kosten für den Betreiber zur Folge hat. Andererseits hat eine derartige unerwünschte "Leckage" zur Folge, dass das Fluid auch in Feldbereichen ausgebracht wird, in welchen dies nicht erfolgen soll, womit eine unerwünschte Kontamination der Umwelt verbunden sein kann. Entsprechendes gilt für die Inbetriebnahme der Agrarspritze: wird erst allmählich der Druck aufgebaut und würde das Agrarspritzen-Überströmventil auch bereits bei einem verschwindend kleinem Differenzdruck, also ohne einen Schwellenwert des Differenzdrucks, öffnen, würde bereits Fluid aus der Agrarspritze ausgebracht, ohne dass der erforderliche Druck vorliegt, der bspw. bereitgestellt werden muss, um mit der Agrarspritze einen gewünschten Sprühkegel oder einer erforderliche Tröpfchengröße des Sprühnebels zu erzeugen

Eine besonders einfache konstruktive Ausgestaltung, die damit mit geringen Kosten verbunden sein kann, ist gegeben, wenn der Sensor ein Reed-Sensor ist. Um hier lediglich ein Beispiel für die Vielzahl möglicher Ausgestaltungen zu nennen, kann der Reed-Sensor mit einem Permanentmagneten ausgebildet sein, welcher mit dem Ventilkörper bewegt wird, während das Magnetfeld des Sensors und dessen Veränderung mit der Veränderung der Stellung des Ventilkörpers (oder auch des Wiegekolbens) von einem gehäusefest angeordneten Aufnehmer erfasst wird.

Im Rahmen der vorliegenden Erfindung kann ein Agrarspritzen-Überströmventil, wie dies zuvor erläutert und beschrieben worden ist, Einsatz finden in einer Feldspritzeinrichtung, die beliebig ausgestaltet sein kann. Um hier lediglich ein Beispiel zu nennen, kann das Agrarspritzen-Überströmventil in der Feldspritzeinrichtung zwischen eine Quelle für das Fluid und eine Ausbringeinrichtung, insbesondere eine Agrarspritze mit einer geeigneten Düse, zwischengeordnet sein. Möglich ist auch, dass die Feldspritzeinrichtung mit einem geschlossenen Kreislauf ausgebildet ist. Es versteht sich, dass eine Vielzahl von Agrarspritzen-Überströmventilen und/oder Agrarspritzen in der Feldspritzeinrichtung Einsatz finden können. Soll eine Steuerung oder Regelung des Ausbringverhaltens, beispielsweise des auszubringenden Volumenstroms, eines Sprühkegels, einer Tropfengröße bei der Ausbringung, eine Teübreitenabschaltung an einem Sprühbalken und ähnliches erfolgen, kann in der Feldspritzeinrichtung das Agrarspritzen-Überströmventil zusammen mit einem aktiv gesteuerten zusätzlichen Agrarspritzen-Ventil, insbesondere gemäß DE 10 2010 001 881.3-23, Einsatz finden, wobei auch möglich ist, dass das Agrarspritzen-Überströmventil und das extern aktiv angesteuerte Agrarspritzen-Ventil als eine integrale singuläre Baueinheit ausgebildet sein können, die aber auch modular ausgebildet sein kann.

In weiterer Ausgestaltung der Erfindung ist in der erfindungsgemäßen Feldspritzeinrichtung eine Auswerteeinrichtung vorhanden, welche über eine Steuerlogik verfügt, die aus dem Signal des Sensors, der die Position des Ventilkörpers erfasst, bestimmt, ob eine dem Agrarspritzen-Überströmventil nachgeordnete Düse ordnungsgemäß arbeitet.

Zusätzlich zu den aufgeführten Ventileinheiten und angesprochenen Funktionen derselben kann ein aktiv gesteuertes Ventil erforderlich sein, um die Ausbringung des Fluids aktiv zu steuern. Um lediglich ein Beispiel zu nennen, kann ein derartiges aktives Ventil auf Veranlassung eines Betreibers oder automatisch von einer Sperrstellung, in der keine Ausbringung des Fluids erfolgt, in eine Durchlassstellung, in der eine Ausbringung des Fluids erfolgt, umgeschaltet werden (und umgekehrt). Denkbar sind auch weitere Betriebsstellungen des aktiv gesteuerten Ventils, in welchen beispielsweise die Ausbringrate des Fluids aktiv in Stufen oder stufenlos verändert werden kann. Ein derartiges aktiv gesteuertes Ventil kann dem Agrarspritzen-Überströmventil vorgeordnet oder nachgeordnet sein, also in Wechselwirkung mit der Primärleitung oder der Sekundärleitung stehen. Ebenfalls möglich ist, dass ein derartiges aktiv gesteuertes Ventil in das Agrarspritzen-Überströmventil selbst integriert ist. Somit sind weitere abhängige Patentansprüche wahlweise ausgerichtet auf ein Agrarspritzen-Überströmventil mit integriertem aktiv gesteuertem Ventil oder eine Feldspritzeinrichtung mit aktiv gesteuertem Ventil, welches separat von dem Agrarspritzen-Überströmventil ausgebildet ist.

Für eine Ausgestaltung der Erfindung ist das aktiv gesteuerte Ventil mit zwei Schaltzuständen ausgestattet, nämlich einem geschlossenen Schaltzustand, in dem ein Ventilkörper eine fluidische Verbindung sperrt, sowie einem geöffneten Schaltzustand, in dem der Ventilkörper die fluidische Verbindung freigibt. Bei der genannten fluidischen Verbindung kann es sich um eine beliebige fluidische Verbindung oder Leitung, beispielsweise die Primärleitung, die Sekundärleitung oder eine Zuführleitung zu einem Druckraum o. ä. handeln. Die Steuerung erfolgt über ein elektromagnetisches Vorsteuerventil, welches Schaltstellungen besitzt, in welchen ein Druckraum mit unterschiedlichen Druckniveaus beaufschlagbar ist. Hierbei wird der Druckraum durch den Ventilkörper begrenzt. Eine Veränderung des Druckniveaus in dem Druckraum beeinflusst das Öffnungs- und Schließverhalten des aktiv gesteuerten Ventils. Hierbei hat eine Verschiebung des Ventilkörpers mit einer Herbeiführung des geöffneten Schaltzustands des aktiv gesteuerten Ventils eine Veränderung des Volumens des Druckraums zur Folge. In einer ersten Schaltstellung des elektromagnetischen Vorsteuerventils verbindet dieses den Druckraum mit einem Eingang der fluidischen Verbindung, während das elektromagnetische Vorsteuerventil in einer zweiten Schaltstellung den Druckraum mit einem Auslass verbindet, der beispielsweise unmittelbar oder mittelbar mit der Umgebung verbunden ist oder zu einer Drucksenke führt, wie beispielsweise einem Tank. Darüber hinaus wird in der zweiten Schaltstellung des Vorsteuerventils Fluid aus dem Druckraum zu dem Auslass gefördert. Diese Förderung erfolgt veranlasst durch eine Verschiebung des Ventilkörpers, wenn das aktiv gesteuerte Ventil in den geöffneten Schaltzustand überführt wird. Diese Verschiebung des Ventilkörpers hat zur Folge, dass sich das Volumen des Druckraums verändert. Mit dieser Volumenveränderung wird die Förderbewegung des Fluids veranlasst - vereinfacht gesagt wirkt die Bewegung des Ventilkörpers als eine Art "Pumpe" für eine Förderung des Fluids zu dem Auslass. Angesichts der Ausbildung des Vorsteuerventils mit den beiden genannten Schaltstellungen erfolgt damit eine exakte Leitung des fluidischen Flusses zu und von dem Druckraum: Während in der ersten Schaltstellung lediglich ein Zufluss zu dem Druckraum von dem Eingang der fluidischen Verbindung über das Vorsteuerventil ermöglicht ist, erfolgt in der zweiten Schaltstellung die Abfuhr von Fluid von dem Druckraum zu dem Auslass. Für einen im Betrieb erfolgenden wiederholten betriebsbedingten Wechsel zwischen der ersten und zweiten Schaltstellung des Vorsteuerventils und zurück ergibt sich somit eine intermittierende, aber stets in eine Richtung gerichtete Förderung von Fluid, nämlich mit kleinen, schrittweise bewegten Volumina des Fluids. Die Größe der Volumina entspricht im Wesentlichen der Veränderung des Volumens des Druckraums für die Verschiebung des Ventilkörpers. Diese Volumina werden sukzessive von der fluidischen Verbindung durch eine Zuführleitung zu dem Druckraum und von dort zu dem Auslass gefördert. Auch etwaige Partikel oder Verunreinigungen in den Fluid werden vorrangig in eine Förderrichtung in Richtung des Auslasses transportiert, wo diese beseitigt werden können. Durch die erfindungsgemäßen Maßnahmen ist somit letztendlich eine gute Reinigung, eine Vermeidung eines Verstopfens und ein Austrag von Partikeln aus dem aktiv gesteuerten Ventil ermöglicht.

Grundsätzlich kann für ein elektromagnetisches Vorsteuerventil ein beliebiges Vorsteuerventil mit einer beliebigen Anzahl von Anschlüssen und/oder Schaltstellungen sowie in beliebiger Bauart verwendet werden. Gemäß einem Vorschlag der Erfindung wird ein elektromagnetisches Vorsteuerventil in Ausbildung als 3/2-Wegeventil verwendet. Derartige Ventile sind kostengünstig zu beziehen, gewährleisten aber dennoch die erste sowie zweite Schaltstellung des Vorsteuerventils. Mit einem derartigen 3/2-Wegeventil können mit minimiertem Aufwand die vorgenannten Schaltstellungen realisiert werden.

Grundsätzlich kann das elektromagnetische Vorsteuerventil auch stromlos, beispielsweise bei Deaktivierung der elektrischen Leistungsversorgung oder bei einem Versagen der elektrischen Leistungsversorgung, in die zweite Schaltstellung geschaltet sein. Für einen anderen erfindungsgemäßen Vorschlag, für welchen das elektromagnetische Vorsteuerventil stromlos in der ersten Schaltstellung ist, kann allerdings ausgeschlossen werden, dass bei einer derartigen Abschaltung oder einem Einbruch der elektrischen Spannungsversorgung das aktiv gesteuerte Ventil geöffnet ist, was dazu führen würde, dass Fluid aus dem Feldspritzsystem ausgebracht wird, ohne dass elektrische Eingriffsmöglichkeiten bestehen. Vielmehr ist für diese Ausgestaltung für den stromlosen Zustand das aktiv gesteuerte Ventil gesichert geschlossen.

Auch das aktiv gesteuerte Ventil kann an sich in beliebiger Bauart ausgebildet sein, beispielsweise auch als Schieberventil, sofern dieses infolge fluidischer Vorsteuerung durch das Vorsteuerventil von einer ersten Schaltstellung in die zweite Schaltstellung überführbar ist (und/oder umgekehrt). Gemäß einer weiteren Ausgestaltung der Erfindung ist allerdings das aktiv gesteuerte Ventil als ein Sitzventil ausgebildet. Derartige Sitzventile sind mit vertretbaren Kosten herstellbar. Des Weiteren führen diese nicht auf Probleme infolge abzudichtender, unter Umständen einem hohen Verschleiß und/oder einer Leckage unterworfenen Steuerkanten, wie diese für ein aktiv gesteuertes Ventil in Schieberbauart erforderlich sein können. Hierbei kann der in dem Sitzventil eingesetzte Ventilkörper ein- oder mehrteilig ausgebildet sein, beispielsweise mit einem Stößel oder anderweitigen Übertragungsmechanismen zwischen einem Ventilteller und einer vom Vorsteuerventil beaufschlagten Fläche.

Der Ventilkörper kann auf beliebige, an sich bekannte Bauweise ausgebildet sein, beispielsweise mit einem Ventilteller und einem starren Ventilkörper. Entsprechend einer Weiterbildung der Erfindung ist allerdings der Ventilkörper mit einer Membran ausgebildet. Eine derartige Membran ist auf einfache Weise kostengünstig zu fertigen und zu montieren und ist vorteilhaft hinsichtlich der gewünschten Dichtwirkung am Ventilsitz sowie der Lebensdauer.

An sich sind die erfindungsgemäßen Maßnahmen und Vorteile nicht gekoppelt an den Einsatz des aktiv gesteuerten Ventils in einer bestimmten fluidischen Verbindung, insbesondere in der Primärleitung oder der Sekundärleitung. Möglich ist, dass dem Druckraum Fluid von einem Leitungsteil, der auf der dem Druckraum gegenüber liegenden Seite der Membran angeordnet ist, zugeführt wird mittels eines die Membran umgehenden Bypasses. Eine besonders kompakte Ausgestaltung kann sich ergeben, wenn ein derartiger Bypass nicht seitlich von der Membran (oder einem anderweitigen Ventilkörper) vorbeigeführt ist, sondern vielmehr der Ventilkörper oder die Membran eine Ausnehmung besitzt, durch welche das Fluid hindurchtreten kann.

Für einen weiteren Vorschlag der Erfindung ist eine Steuereinheit vorgesehen. Diese kann in das aktiv gesteuerte Ventil oder das Agrarspritzen-Überströmventil integriert sein oder an diese angebaut sein. Denkbar ist auch, dass eine Steuereinheit dezentral angeordnet ist und über eine geeignete Steuerleitung auf das Vorsteuerventil einwirkt, wobei in diesem Fall die Steuereinheit auch für mehrere aktiv gesteuerte Ventile oder Agrarspritzen-Überströmventile sowie unter Umständen auch für weitere Steuerungszwecke genutzt werden kann. Möglich ist auch, dass jeweils eine separate Steuereinheit einem aktiv gesteuerten Ventil zugeordnet ist als externe Steuereinheit oder integrierte Steuereinheit. In jedem Fall ist die Steuereinheit über eine Steuerleitung mit dem elektromagnetischen Vorsteuerventil verbunden.

Möglich ist, dass eine "Spülung" des aktiv gesteuerten Ventils durch die erfindungsgemäßen Maßnahmen durchgeführt wird im üblichen Betrieb der Agrarspritze, indem jeweils für die Öffnung des aktiv gesteuerten Ventils Fluid aus dem Auslass ausgeschoben wird und für die Schließung des aktiv gesteuerten Ventils neues Fluid von der fluidischen Verbindung zu dem Druckraum geführt wird. Für einen weiteren Vorschlag der Erfindung ist die Steuereinheit mit einer Steuerungslogik ausgestattet, die derart ausgebildet ist, dass das elektromagnetische Vorsteuerventil über ein über die Steuerleitung gesendetes Vorsteuersignal innerhalb eines vorgegebenen Zeitintervalls wiederholt zwischen der ersten und zweiten Schaltstellung hin- und herschaltbar ist. Demgemäß wird in kurzen Abständen immer wieder Fluid aus der Primärleitung zu dem Druckraum nachgeführt und aus dem Druckraum über den Auslass beseitigt, womit die Ventileinheit mit der Zuführleitung, dem Druckraum, der Abführleitung und den Führungsflächen für bewegte Bauelemente "durchspült" werden kann. Auch die durch das Hin- und Herschalten erzeugten Druckpulsationen können genutzt werden, um sich ablagernde Partikel "loszureißen" und über den Auslass aus dem aktiv gesteuerten Ventil abzuführen.

Hinsichtlich weiterer Ausgestaltungen und Vorteile der beanspruchten Ausgestaltung des aktiv gesteuerten Ventils wird auf die Druckschrift DE 10 2010 001 881.3-23, siehe hier die Agrarspritzen-Ventileinheit 1, verwiesen, welche separat mit dem Agrarspritzen-Überströmventil in Wechselwirkung stehen kann oder mit dieser eine Baueinheit, vorzugsweise auch mit mehreren Modulen, bilden kann. Die Offenbarung von DE 10 2010 001 881.3-23 wird zum Gegenstand der vorliegenden europäischen Patentanmeldung gemacht.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einem schematisierten Längsschnitt ein Agrarspritzen-Überströmventil, welches mit einer Überwurfmutter an einer standardisierten Halterung gehalten ist, wobei sich das Agrarspritzen-Überströmventil in einer Schließstellung befindet.
- **Fig. 2**: zeigt ein Detail II des Agrarspritzen-Überströmventils gemäß Fig. 1.
- **Fig. 3**: zeigt einen Querschnitt III-III durch das Agrarspritzen-Überströmventils gemäß Fig. 1 und 2.
- **Fig. 4**: zeigt das Agrarspritzen-Überströmventil gemäß Fig. 1 bis 3 in einer Übergangsstellung zwischen einer ersten Öffnungsstellung und einer zweiten Öffnungsstellung.
- **Fig. 5**: zeigt das Agrarspritzen-Überströmventil gemäß Fig. 1 bis 4 in der zweiten Öffnungsstellung.

- **Fig. 6**: zeigt die Öffnungscharakteristik des Agrarspritzen-Überströmventils gemäß Fig. 1 bis 5, wobei hier die Abhängigkeit des Öffnungsquerschnitts oder des Volumenstroms von dem Differenzdruck zwischen einer Primärleitung und einer Sekundärleitung des Agrarspritzen-Überströmventils dargestellt ist.
- **Fig. 7**: zeigt in einem schematischen Längsschnitt eine weitere Ausgestaltung eines Agrarspritzen-Überströmventils, in welches ein aktiv gesteuertes Ventil integriert ist, welches hier in einer Sperrstellung dargestellt ist.
- **Fig. 8**: zeigt ein Detail VIII des Agrarspritzen-Überströmventils gemäß Fig. 7.
- **Fig. 9**: zeigt einen Querschnitt IX-IX des Agrarspritzen-Überströmventils gemäß Fig. 7.
- **Fig. 10**: zeigt das Agrarspritzen-Überströmventil entsprechend Fig. 7 bis 9, wobei hier allerdings das aktiv gesteuerte Ventil in einer Öffnungsstellung dargestellt ist.
- **Fig. 11**: zeigt das Agrarspritzen-Überströmventil gemäß Fig. 10 mit dem aktiv gesteuerten Ventil in der Öffnungsstellung, hier allerdings mit veränderter Betriebsstellung des Überströmventils.

### FIGURENBESCHREIBUNG

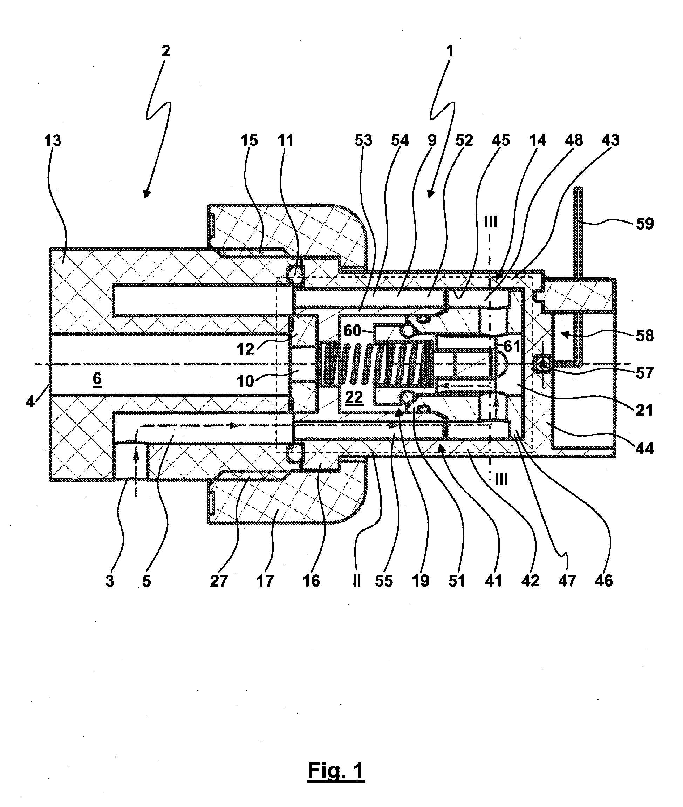

**Fig. 1** zeigt ein Agrarspritzen-Überströmventil 1, welches an einer Halterung 2 gehalten ist. Die Halterung 2 verfügt über einen Zuführanschluss 3, über welchen der Halterung 2 Fluid aus einer Druckluftquelle oder einer Zentralleitung zugeführt wird. Darüber hinaus verfügt die Halterung 2 über einen Abführanschluss 4, über welchen das Fluid ausgebracht wird, beispielsweise über eine in Strömungsrichtung nachgeordnete Agrarspritze mit Düse. Der Zuführanschluss 3 kommuniziert mit einer Zuführleitung 5, während der Abführanschluss 4 mit einer Abführleitung 6 kommuniziert.

Die Halterung 2 verfügt über eine Stirnseite 7, im Bereich welcher eine Schnittstelle 8 gebildet ist, über die das Fluid aus der Zuführleitung 5 übergeben wird in eine Primärleitung 9 des Agrarspritzen-Überströmventils 1 und Fluid von einer Sekundärleitung 10 des Agrarspritzen-Überströmventils 1 übergeben wird an die. Abführleitung 6 der Halterung 2. Neben der erläuterten fluidischen Verbindung dient die Schnittstelle 8 auch einer Abdichtung der genannten fluidischen Verbindungen gegeneinander und nach außen, wozu an sich bekannte Dichtelemente, hier ein O-Dichtring 11, der radial außenliegend von der Zuführleitung 5 und der Primärleitung 9 in einer Nut der Halterung 2 und/oder des Agrarspritzen-Überströmventils 1 angeordnet ist, und eine kreisringförmige Dichtscheibe 12, eingesetzt sein können. Diese Dichtelemente können zwischen einem Gehäuse 13 der Halterung 2 und einem Gehäuse 14 des Agrarspritzen-Überströmventils 1 verspannt sein.

Die Halterung 2 besitzt im Bereich ihrer der Stirnseite 7 zugewandten Mantelfläche ein Außengewinde 15. Unter Umständen ist die Stirnseite 7, sind die Dichtelemente mit dem O-Ring 11 und der Dichtscheibe 12 und/oder ist das Außengewinde 15 der Halterung standardisiert, um den Betrieb der Halterung 2 mit unterschiedlichen Ventilen zu ermöglichen, so dass das erfindungsgemäße Agrarspritzen-Überströmventil 1 auch lediglich in Bedarfsfällen an der Halterung 2 angebracht werden kann, während für andere Bedarfsfälle andere Ventileinheiten an der Halterung 2 angebracht werden. Ebenfalls möglich ist, dass das erfindungsgemäße Agrarspritzen-Überströmventil 1 als Austauschlösung für zuvor eingesetzte Ventile gemäß dem Stand der Technik eingesetzt werden kann.

Wie dargestellt ist das Gehäuse 14 des Agrarspritzen-Überströmventils 1 in dem der Stirnseite 7 zugewandten Endbereich mit einem ringförmigen umlaufenden Absatz 16 ausgestattet. An diesem Absatz 16 stützt sich eine Überwurfmutter 17 ab, die ein Innengewinde 27 besitzt, welches mit dem Außengewinde 15 der Halterung verschraubt werden kann. Mit voranschreitender Verschraubung werden der O-Dichtring 11 und die Dichtscheibe 12 zunehmend zwischen der Stirnseite 7 der Halterung 2 und einer Stirnseite 18 des Gehäuses 14 verspannt und es wird eine fluiddichte Verbindung der Zuführleitung 5 mit der Primärleitung 9 einerseits und der Sekundärleitung 10 und der Abführleitung 6 andererseits geschaffen. Andererseits dient die Überwurfmutter 17 der Befestigung des Agrarspritzen-Überströmventils 1 an der Halterung 2.

Das Gehäuse 14 des Agrarspritzen-Überströmventils 1 besitzt einen Innenraum 19. In dem Innenraum 19 trennt in der in Fig. 1 dargestellten Schließstellung ein Ventilkörper 20 einen ersten Druckraum 21 und einen zweiten Druckraum 22. Die Primärleitung 9 mündet in dem der Halterung 2 abgewandten Endbereich des Innenraums 19 in den ersten Druckraum 21, während der zweite Druckraum 22 fluidisch mit der Sekundärleitung 10 gekoppelt ist. Der Innenraum 19 ist radial nach außen begrenzt durch zylinderförmige Innenflächen 23, 24 des Gehäuses 14, die über einen Absatz 25, hier mit einer Fase 26, miteinander verbunden sind.

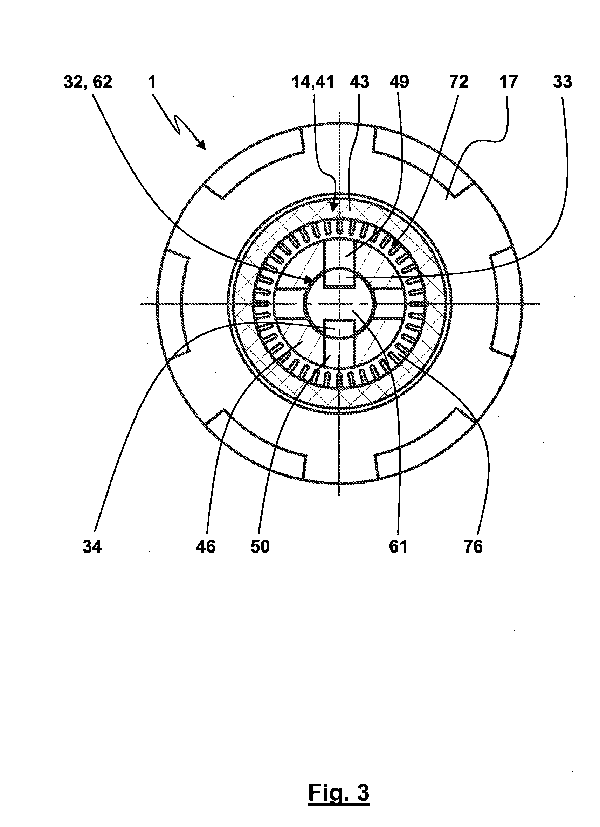

Der Ventilkörper 20 ist (in grober Näherung) in dem in Fig. 1 dargestellten Längsschnitt in Form eines liegenden T ausgebildet. Der Querschenkel des T wird von einer Verdickung 28 des Ventilskörpers 20 gebildet. Auf der dem Absatz 25 bzw. der Fase 26 zugewandten Seite stützt sich an dem Absatz 28 ein Dichtelement 29, hier ein O-Ring, ab. Der Vertikalschenkel des T ist mit grundsätzlich zylindrischer Mantelfläche 31 ausgebildet. Über eine axiale Erstreckung oder Länge 30 bildet die Mantelfläche 31 mit der Innenfläche 24 des Gehäuses 14 einen hohlzylinderförmigen Ringspalt 32 aus, der in dem dem zweiten Druckraum 22 zugewandten Endbereich durch das Dichtelement 29 in der Schließstellung gemäß Fig. 1 verschlossen ist. Der Ringspalt 32 setzt sich auch über die axiale Erstreckung oder Länge 30 hinaus in Richtung des ersten Druckraums 21 fort. Allerdings besitzt der Ventilkörper 20 sich auf dem Umfang gegenüberliegende Nuten 33, 34 mit einer Länge oder Erstreckung 35, die in einem Endbereich in die erste Druckkammer 21 einmünden. Aus Fig.3 ist ersichtlich, dass hier vier Nuten in 12-Uhr-, 3-Uhr-, 6-Uhr- und 9-Uhr-Position vorhanden sind. Über die Länge oder Erstreckung 35 ergibt sich somit zwischen Gehäuse 14 und Ventilkörper 20 ein lichter Querschnitt, welcher sich aus der Summe des Querschnitts des Ringspalts 32 und des Querschnitts der Nuten 33, 34 ergibt.

Der Ventilkörper 20 ist von einer abgestuften Bohrung 36 durchsetzt, in die in dem dem ersten Druckraum 21 zugewandten Endbereich unter Abdichtung ein Permanentmagnet 37 eingesetzt ist. In dem anderen Bohrungsbereich der abgestuften Bohrung 36, der einen größeren Durchmesser besitzt, ist eine Druckfeder 38 angeordnet, die sich mit einem Federfusspunkt an dem Absatz zur Verringerung des Durchmessers der abgestuften Bohrung 36 abstützt. Der gegenüberliegende Federfußpunkt der Druckfeder 38 ist abgestützt an einer quer zur Längsachse des Ventilkörpers 20 orientierten Gehäusewandung 39. Die Gehäusewandung 39 verfügt über eine abgestufte Bohrung 40, welche einerseits der Aufnahme eines Federfußpunktes der Druckfeder 38 und andererseits zur Bildung der Sekundärleitung 10 dient. In einer Querschnittserweiterung der Gehäusewandung 39 auf der der Halterung 2 zugewandten Seite findet die Dichtscheibe 12 Aufnahme.

Für das dargestellte Ausführungsbeispiel ist das Gehäuse 14 des Agrarspritzen-Überströmventils mehrteilig ausgebildet: Das Gehäuse 14 verfügt über ein Außenteil 41, welches den Absatz 16 ausbildet und in dem in Fig. 1 dargestellten Längsschnitt in Form eines liegenden U ausgebildet ist mit Seitenschenkeln 42, 43 und einem Grundschenkel 44. Die Schenkel 42-44 begrenzen eine Sacklochbohrung 45, in die ein erstes Innenteil 46.des Gehäuses 14 eingesetzt ist. Das erste Innenteil 46 liegt im Bereich eines Bundes 47 passgenau an der Sacklochbohrung 45 an, während benachbart des Bundes 47 zwischen Innenteil 46 und Sacklochbohrung 45 ein in Richtung der Halterung 2 offener hohlzylinderförmiger Ringspalt 48 gebildet ist. Radial innenliegend bildet das erste Innenteil 46 die Innenfläche 24 aus. In radialer Richtung ist das erste Innenteil 46 von sich diametral gegenüberliegenden Radialbohrungen 49, 50 durchsetzt, die, ausgehend von der Innenfläche 24, in den Ringspalt 48 münden. Das erste Innenteil 46 bildet auch den Absatz 25 und die Fase 26 aus. Das erste Innenteil 46 besitzt auf der der Halterung 2 zugewandten Seite einen ringförmigen Ansatz 51, welcher mit der Sacklochbohrung 45 des Außenteils 41 einen hohlzylinderförmigen Ringspalt 52 ausbildet. In diesen Ringspalt 52 tritt ein zweites Innenteil 53 ein, welches in erster Näherung in dem Längsschnitt gemäß Fig. 1 in der Form eines liegenden U ausgebildet ist, wobei der Grundschenkel des U die Gehäusewandung 39 bildet, während die dem Grundschenkel abgewandten Seitenschenkel des U in den Ringspalt 52 eintreten. Der Ringspalt 48 des ersten Innenteils 46 setzt sich in Nuten 54, 55 des zweiten Innenteils 53 fort, die über die Schnittstelle 8 in die Zuführleitung 5 münden. In der Verbindungsfuge zwischen dem ersten Innenteil 46 und dem zweiten Innenteil 53 ist ein Dichtelement 56 angeordnet, welches einen Übertritt von Fluid aus der Primärleitung 9, also den Nuten 54, 55 und dem Ringspalt 48, zu dem zweiten Druckraum 22 unterbindet.

In das Gehäuse 14, für das dargestellte Ausführungsbeispiel in den Grundschenkel 44 des Außenteils 41, ist ein Aufnehmer 57 integriert. Der Aufnehmer 57 und der Permanentmagnet 37 bilden gemeinsam einen Sensor 58, welcher die Position des Ventilkörpers 20 relativ zu dem Gehäuse 14 erfasst. Ein Ausgangssignal des Sensors 58 wird über eine geeignete Schnittstelle, einen Anschluss oder eine Ausgangsleitung 59 einem benachbarten Bauelement, einer Steuereinheit o. ä. zugeführt.

Die Montage des Agrarspritzen-Überströmventils 1 erfolgt wie folgt: Zunächst wird der Ventilkörper 20 eingesetzt in das Innenteil 46. Anschließend wird das erste Innenteil 46 mit dem darin vormontierten Ventilkörper 20 in die Sacklochbohrung 45 des Außenteils 41 eingesetzt. Als nächstes wird das zweite Innenteil 53 in die Sacklochbohrung 59 des Außenteils 41 eingesetzt, wobei bereits die Druckfeder 38 zwischen das erste Innenteil 46 und das zweite Innenteil 53 zwischengeordnet ist oder wird. Ebenfalls kann bereits die Dichtscheibe 12 in das zweite Innenteil 53 eingesetzt sein. Alternativ möglich ist, dass bereits außerhalb des Außenteils 41 das erste Innenteil 46 mit dem zweiten Innenteil 53 montiert wird mit Zwischenordnung der Druckfeder 38, woran anschließend dann diese Bauelemente gemeinsam in die Sacklochbohrung 45 des Außenteils 41 eingeführt werden können. Hieran anschließend wird das Agrarspritzen-Überströmventil 1 koaxial zu der Halterung 2 angeordnet und die Überwurfmutter 17 wird zur Wirkung gebracht, womit wie bereits erläutert die fluidischen Verbindungen geschaffen werden mit den gewünschten Dichtwirkungen.

Im Folgenden wird die Funktion des Agrarspritzen-Überströmventils unter Bezugnahme auf die **Fig. 1****,** **4** **und** **5** erläutert:
a) Fig. 1 zeigt das Agrarspritzen-Überströmventil 1 in seiner Schließstellung. In dieser ist ein Übertritt von Fluid von dem Druckraum 21 in den Druckraum 22, und damit ein Übertritt von der Primärleitung 9 zu der Sekundärleitung 10, nicht möglich, da infolge der Druckfeder 38 der Ventilkörper 20 nach rechts gepresst wird, was zur Folge hat, dass das Dichtelement 29 zwischen der Verdickung 28 und der Fase 26 bzw. dem Absatz 25 eingepresst wird mit Abdichtung bzw. Verschließung eines Übertrittsquerschnitts.
b) Geht man davon aus, das eine dem Abführanschluss 4 nachgeordnete Düse einer Agrarspritze geöffnet ist, entspricht der Druck in dem zweiten Druckraum 22 ungefähr dem Umgebungsdruck. Der Druck in der Sekundärleitung 10, also in dem zweiten Druckraum 22, wirkt an einer zweiten Kolbenfläche 60, die von einer Stirnseite des Ventilkörpers 20 ausgebildet ist. Die Größe der zweiten Kolbenfläche 60 entspricht einer Kreisfläche mit dem Durchmesser der Verdickung 28.
   Auf der der zweiten Kolbenfläche 60 gegenüberliegenden Stirnseite bildet der Ventilkörper 20 eine erste Kolbenfläche 61 aus, deren Fläche einer Kreisfläche mit dem Durchmesser der Mantelfläche 31 entspricht. Hierbei ist für das dargestellte Ausführungsbeispiel die zweite Kolbenfläche 60 größer als die erste Kolbenfläche 61. Der mit dem Dichtelement 29 und der Verdickung 28 sowie der Fase 26 oder dem Absatz 25 gebildete Ventilsitz ist hierbei zwischen den beiden Kolbenflächen 60, 61 angeordnet. Mit den Kolbenflächen 60, 61 ist ein Wiegekolben 71 gebildet. Steigt, beispielsweise für die Inbetriebnahme des Agrarspritzen-Überströmventils 1, der Druck in der Primärleitung 9 und damit in dem ersten Druckraum 21 an, wirkt an dem Ventilkörper 20 an der ersten Kolbenfläche 61 eine ansteigende Druckkraft, während die an der zweiten Kolbenfläche 60 bewirkte Druckkraft konstant bleibt. Wird ein Schwellenwert 67 für einen Öffnungsdruck in dem Druckraum 21 bzw. für einen Differenzdruck überschritten, welcher durch die Druckfeder 38 und die Größen der Kolbenflächen 60, 61 konstruktiv vorgegeben ist, kann die in dem Druckraum 21 auf die Kolbenfläche 61 ausgeübte Druckkraft den Ventilkörper 20 nach links bewegen, womit die Verpressung des Dichtelements 29 zwischen der Verdickung 28 und der Fase 26 bzw. dem Absatz 25 aufgehoben wird, so dass sich das Dichtelement 29 von der Fase 26 oder dem Absatz 25 löst und ein Übertrittsquerschnitt für Fluid geschaffen ist. Nun kann Druckluft von dem ersten Druckraum 21
   - im Bereich der Axialerstreckung 35 über die Nuten 33, 34 und den Ringspalt 32,
   - im Bereich der Axialerstreckung 30 über den Ringspalt 32
   - und dann über den Spalt zwischen Dichtelement 29 und Fase 26
   zu dem Druckraum 22 übertreten. Hierbei bildet der Ringspalt 32 im Bereich der Axialerstreckung 30 eine Drossel 62.
c) Steigt der Druck in dem ersten Druckraum 21 weiter an, ohne dass sich infolge der Ausbringung des Fluids der Druck in den Druckraum 22 signifikant erhöht, geht dies einher mit einer weiteren Verschiebung des Ventilkörpers 20 nach links unter weiterer Beaufschlagung der Druckfeder 38. Dies hat zur Folge, dass sich die Axialerstreckung 30 oder Länge 30 des Ringspalts 32 mit Überdeckung der Innenfläche 24 abseits der Nuten 33, 34 und der Mantelfläche 31 verringert. Dies hat zur Folge, dass sich die Länge der mit dem Ringspalt 32 gebildeten Drossel 62 verändert, womit, insbesondere für die Verringerung der Axialerstreckung oder Länge 30 auf Null, sich zunehmend der Übertrittsquerschnitt von dem ersten Druckraum 21 zu dem zweiten Druckraum 22 vergrößert und sich die Drossellänge der Drossel 62 verringert. Im Rahmen der Erfindung wird der Übertrittsquerschnitt, welcher im Bereich der Länge 35 mit den Nuten 33, 34 sowie dem Ringspalt 32 gebildet ist sowie im Bereich der Axialerstreckung oder Länge 30 ausschließlich mit dem Ringspalt 32 gebildet ist, als erster Übertrittsquerschnitt bezeichnet.

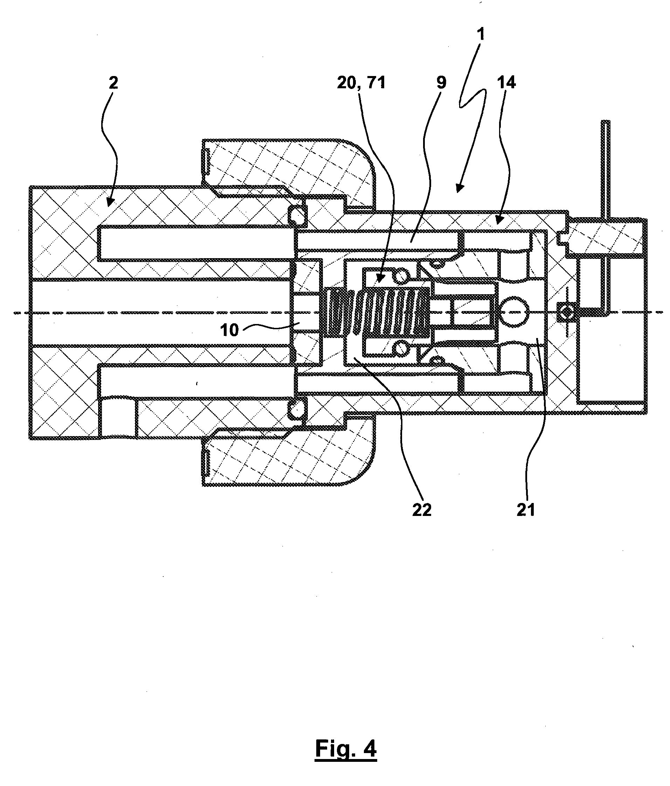

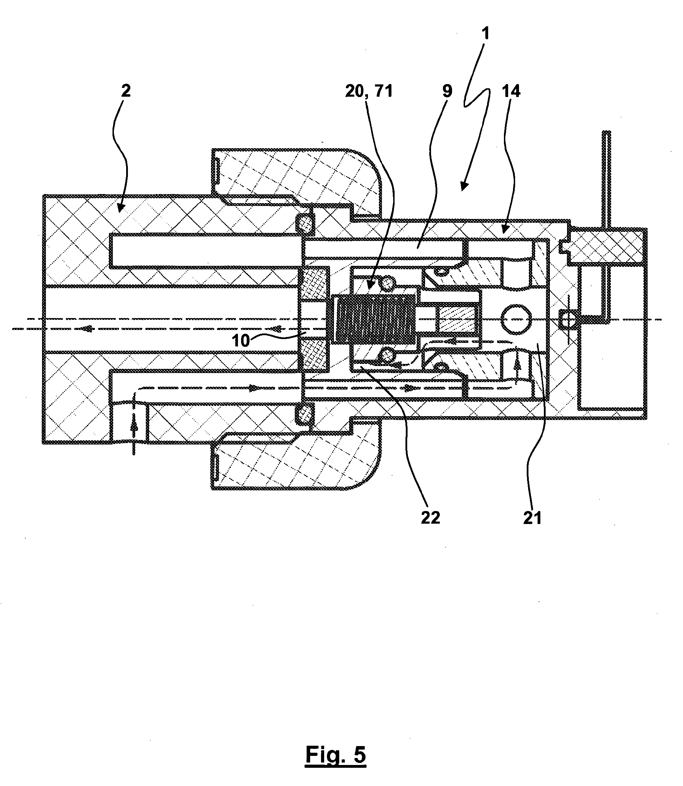

d) Fig. 4 zeigt eine besondere Stellung des Agrarspritzen-Überströmventils. Für diese Stellung überfährt eine von der Fase 26 oder dem Absatz 25 gebildete Steuerkante 63 die dem zweiten Druckraum 22 zugewandte Begrenzung 64 der Nuten 33, 34, so dass sich das Fluid für eine Länge 30 von Null durch den Ringspalt 32 zwängen muss. Mit weiterer Verschiebung des Ventilkörpers 20 nach links infolge einer weiteren Druckerhöhung in dem ersten Druckraum 21 erfolgt die fluidische Verbindung zwischen den Druckräumen 21, 22 über einen zweiten Öffnungsquerschnitt. Hier gelangt das Fluid aus dem ersten Druckraum 21 unmittelbar über die Nuten 33, 34 zu dem zweiten Druckraum 22, wie dies in Fig. 5 dargestellt ist. Der zweite Übertrittsquerschnitt ist somit deutlich größer als der erste Übertrittsquerschnitt oder in der zweiten Öffnungsstellung erfolgt eine deutlich verringerte Drosselung der Strömung des Fluids.
e) Für vorherige Überlegungen wurde angenommen, dass der Druck in dem zweiten Druckraum 22 nicht signifikant ansteigt. Kommt es beispielsweise zu einer Verstopfung der fluidischen Leitungen oder einer Düse einer Agrarspritze stromabwärts der Sekundärleitung 10, erhöht sich der Druck in dem zweiten Druckraum 22, was bei geeigneter Auslegung der Kolbenflächen 60, 61 und der Druckfeder 38 auch bei Betriebsdruck in dem ersten Druckraum 21 zur Folge hat, dass sich sukzessive in Umkehrung der oben erläuterten Stellungsänderungen der Ventilkörper 20 wieder nach rechts bewegt. Schließlich kann sogar trotz anliegenden Betriebsdrucks in dem ersten Druckraum 21 die Schließstellung gemäß Fig. 1 wieder herbeigeführt werden.

Eine Besonderheit der erfindungsgemäßen Ausgestaltung ist, dass für eine Axialerstreckung 30 größer als Null der Ventilkörper 20 einen verhältnismäßig großen Weg durchläuft für die Überführung des Agrarspritzen-Überströmventils aus der Schließstellung gemäß Fig. 1 bis hin zu der vollständigen Öffnungsstellung oder zweiten Öffnungsstellung gemäß Fig. 5. Dies hat zur Folge, dass eine Unterscheidung der Schließstellung von der (vollständigen) Öffnungsstellung erfindungsgemäß mittels eines Sensors 58 erfolgen kann, der unter Umständen eine verhältnismäßig kleine Messgenauigkeit besitzt. Dies ermöglicht den Einsatz eines Sensors 58 in Ausbildung als Reed-Kontakt, welcher mit dem Permanentmagneten 37 und dem Aufnehmer 57 gebildet sein kann.

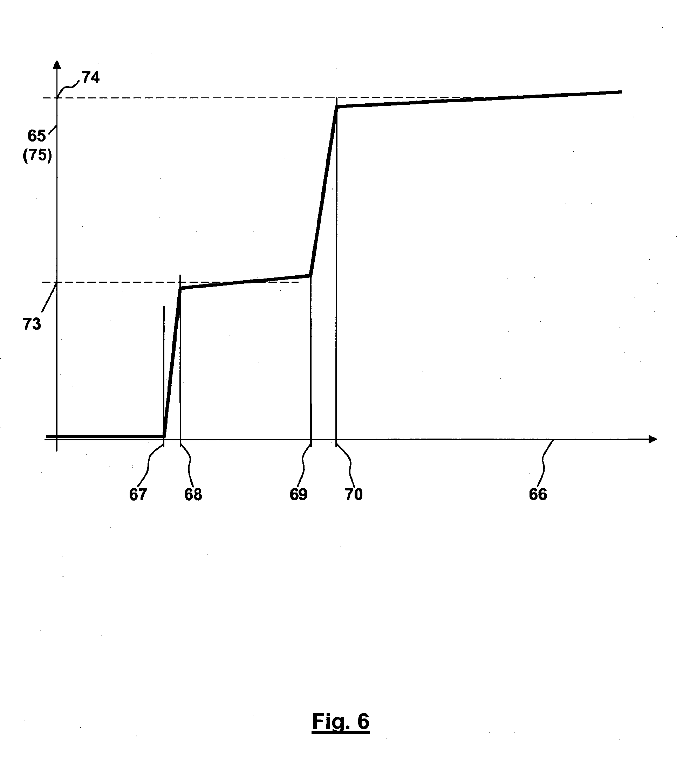

**Fig. 6** zeigt den Öffnungsquerschnitt 65 oder aber den Volumenstrom 75 des Agrarspritzen-Überströmventils 1 als Funktion des Differenzdrucks 66 in den Druckräumen 21, 22. Mit der Inbetriebnahme steigt zunächst der Druck in dem Druckraum 21 an, ohne dass sich das Dichtelement 29 von der Fase 26 löst, so dass der Öffnungsquerschnitt 65 oder Volumenstrom 75 bis zu einem Schwellenwert 67 Null beträgt. Mit Überschreiten des Schwellenwerts 67 löst sich zunehmend das Dichtelement 29 von der Fase 26, was gemäß Fig. 6 zu einer Vergrößerung des Öffnungsquerschnitts mit endlicher Steigung bis zu einem Differenzdruckwert 68 dargestellt ist, für den der Öffnungsquerschnitt 65 abhängig ist von dem Ringspalt 32. Zwischen dem Differenzdruckwert 68 und einem größeren Differenzdruckwert 69, welcher der Schaltstellung gemäß Fig. 4 entspricht, bleibt der Öffnungsquerschnitt 65 weitestgehend konstant. Allerdings nimmt unter Umständen infolge der sich verringernden Länge 30 eine Drosselwirkung des Ringspalts 32 ab, was mit einem sich erhöhenden Volumenstrom des Fluids korrelieren kann. In Fig. 6 ist aus diesem Grund der Volumenstrom 75 zwischen den Differenzdruckwerten 68, 69 mit geringfügiger Steigung dargestellt, was die sich verringernde Drosselwirkung symbolisieren soll. Im Druckbereich zwischen den Differenzdruckwerten 69 und 70 überfährt die Begrenzung 64 die Steuerkante 63, womit sich mit endlicher Steigung der Öffnungsquerschnitt 65 oder Volumenstrom 75 vergrößert. Für Differenzdrücke, die größer sind als der Differenzdruckwert 70, gelangt das Fluid unmittelbar über die Nuten 33, 34 von dem Druckraum 21 in den Druckraum 22, so dass in diesem Druckbereich der Öffnungsquerschnitt 65 oder Volumenstrom 75 weitestgehend unabhängig von der Stellung des Ventilkörpers 20 und des Differenzdrucks 66 ist.

Neben der Funktion, dass der Sensor 58 die Stellung des Ventilkörpers 20 erfasst und als Druckwächter dienen kann, kann der Sensor 58 eine weitere Funktion erfüllen, indem für die Schließung des Reed-Kontakts auch eine Funktionsprüfung des elektrischen Schaltkreises erfolgen kann, mittels welcher beispielsweise eine Kabelbruchüberwachung erfolgen kann.

Vorzugsweise ist das Gehäuse 14 vollständig oder teilweise aus Kunststoff hergestellt. Für eine Ausgestaltung sind das Außenteil 41 und das zweite Innenteil 53 aus Kunststoff, Aluminium oder Edelstahl hergestellt, während das erste Innenteil 46 und der Ventilkörper aus Metall, insbesondere Edelstahl oder Aluminium, hergestellt sind.

Möglich ist, dass zwischen der Sacklochbohrung 45 und den zugeordneten Außenflächen der Innenteile 46, 53 eine verhältnismäßig lose Passung gewählt ist, während für die Funktionsflächen zwischen dem ersten Innenteil 46 und dem Ventilkörper 20 eine engere Passung gewählt ist. Dies führt auf den Vorteil, dass bei einer Demontage des Agrarspritzen-Überströmventils 1 die Innenteile 46, 53 auf einfache Weise aus dem Außenteil 41 entfernt werden können, während zunächst der Ventilkörper 20 in dem ersten Innenteil 46 verbleibt, so dass durch Wahl der Passungen vermieden ist, dass die Teile bei der Demontage sofort vollständig auseinanderfallen.

Vorzugsweise beträgt der Schwellenwert 67 0,5, 0,8 oder 1 bar, wobei Abweichungen von ± 20 % von den vorgenannten Schwellwerten durchaus ebenfalls möglich sind.

Beschrieben worden ist die Umschaltung des Agrarspritzen-Überströmventils 1 von der ersten Öffnungsstellung in die zweite Öffnungsstellung lediglich in Abhängigkeit von dem Differenzdruck an den beiden Kolbenflächen 60, 61. Überlagert sein kann diesem Effekt eine Abhängigkeit der Stellung des Ventilkörpers 20 von der Strömungsgeschwindigkeit: Das strömende Fluid kann im Bereich des Ringspalts 32 über die Länge 30 eine Fluidkraft oder Scherkraft auf die Mantelfläche 31 des Ventilkörpers 20 ausüben, die bestrebt ist, den Ventilkörper 20 in den Figuren nach links zu drücken. Die Dimensionierung dieses Effekts erfolgt insbesondere über die Viskosität des Fluids, die Wahl der Oberflächenbeschaffenheit der Mantelfläche 31 des Ventilkörpers 20 im Bereich des Ringspalts 32 und über die radiale Erstreckung des Ringspalts 32, also die Drosselgeometrie.

Vorzugsweise besitzt das Agrarspritzen-Überströmventil 1 ein nichtlineares Ansprechverhalten, für welches für kleinen Differenzdruck zwischen den Differenzdruckwerten 68, 69 die Stellung des Ventilkörpers 20 sehr sensibel von dem Differenzdruck abhängig ist. Hingegen wird für Differenzdrücke oberhalb des Differenzdruckwerts 70 mittels des Agrarspritzen-Überströmventils 1 ein großer Volumenstrom des Fluids ermöglicht.

Es versteht sich, dass abweichend zu den dargestellten Ausführungsbeispielen beispielsweise ein anderweitig ausgebildeter Sensor zur Erfassung der Position des Ventilkörpers 20 Einsatz finden kann. Weiterhin sind beliebige Nutgeometrien der Nuten 33, 34 möglich, über welche dann das Öffnungsverhalten oberhalb des Differenzdruckwerts 70 beeinflusst werden kann. Beispielsweise kann die Nutbreite der Nuten 33, 34 nicht konstant sein, sondern sich über die axiale Erstreckung 35 vergrößern oder verkleinern.

Die gewählte Bauform des Agrarspritzen-Überströmventils 1 ist ebenfalls lediglich exemplarisch gewählt. Denkbar ist durchaus, dass im Rahmen der vorliegenden Erfindung der Wiegekolben 71 mit einem Stößel gekoppelt ist, welcher dann ein Ein-Auslassventil, ggf. mit Zwischenstellungen in Ausbildung als Sitzventil oder Schieberventil betätigt.

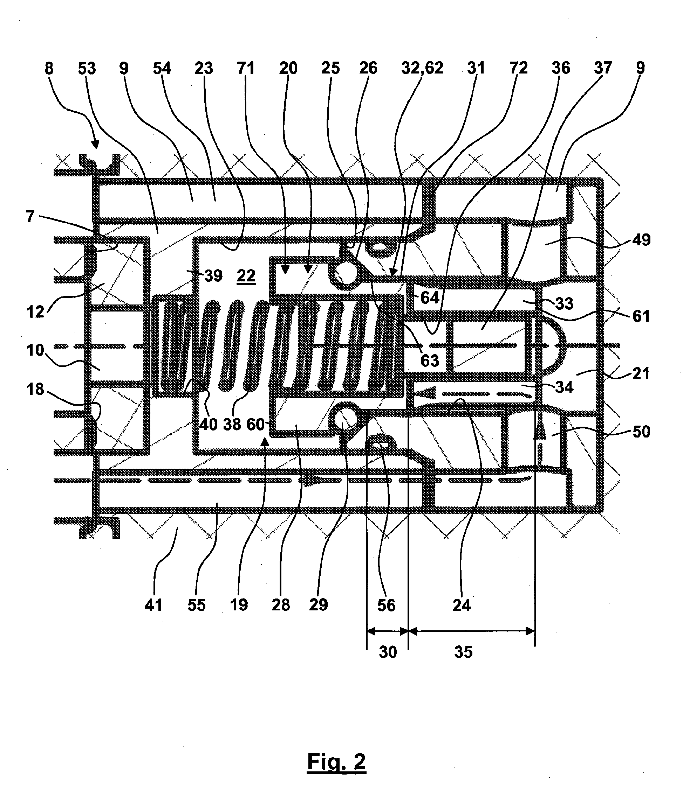

Für das in den Figuren 1 bis 6 dargestellte Ausführungsbeispiel ist, vorzugsweise in der Primärleitung 9, ein Filterelement 72 angeordnet. Für das dargestellte Ausführungsbeispiel ist das Filterelement 72 mit einem Sieb aus Edelstahl gebildet, welches als Ring mit einzelnen ausgestanzten Fingern 76 ausgebildet ist, wobei das Fluid durch die lichte Weite zwischen den radialen Fingern 76 hindurchtreten kann. Das Filterelement 72 ist hier zwischen den Innenteilen 46, 53 angeordnet.

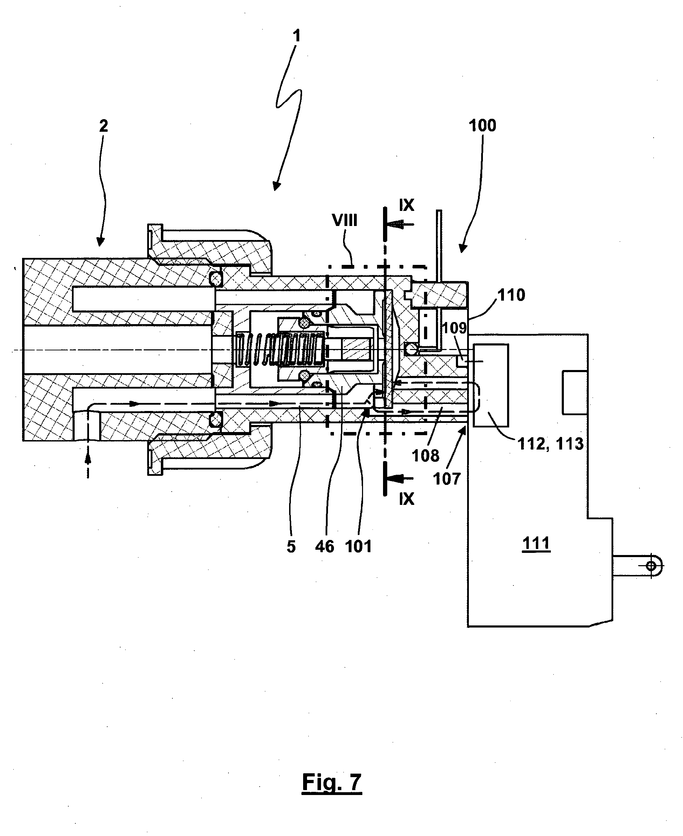

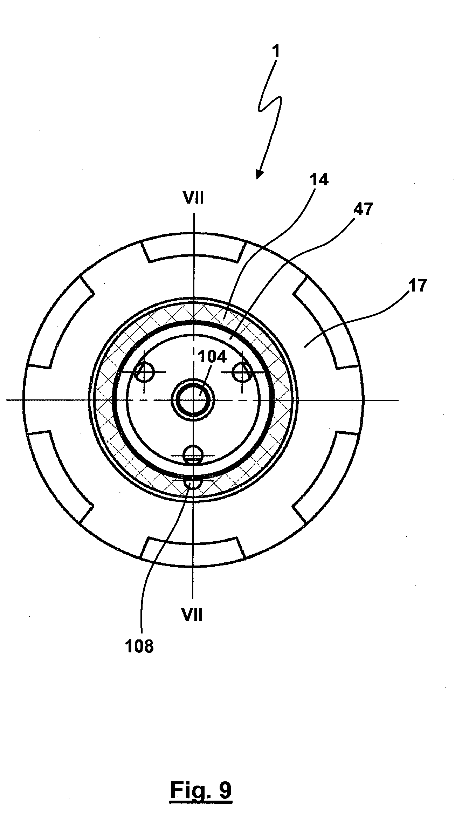

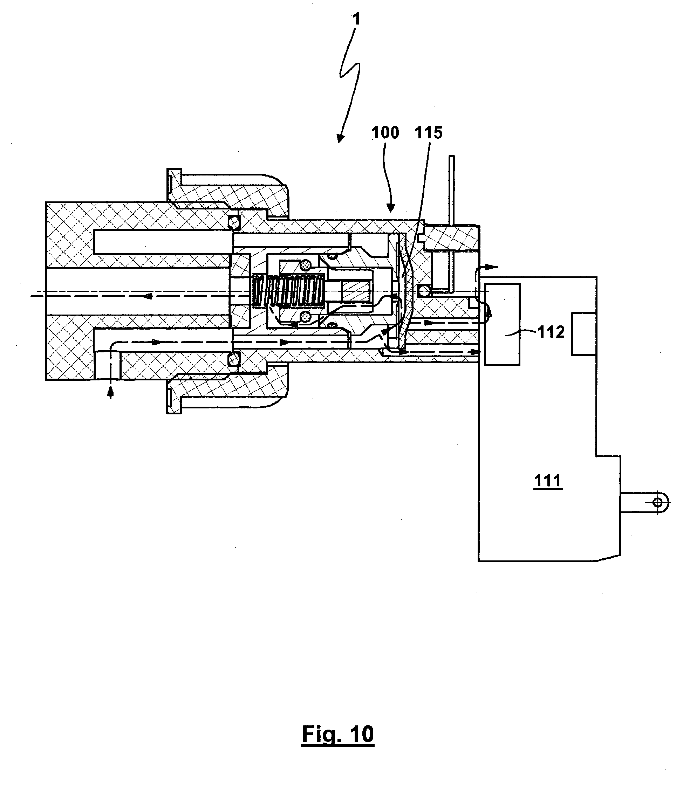

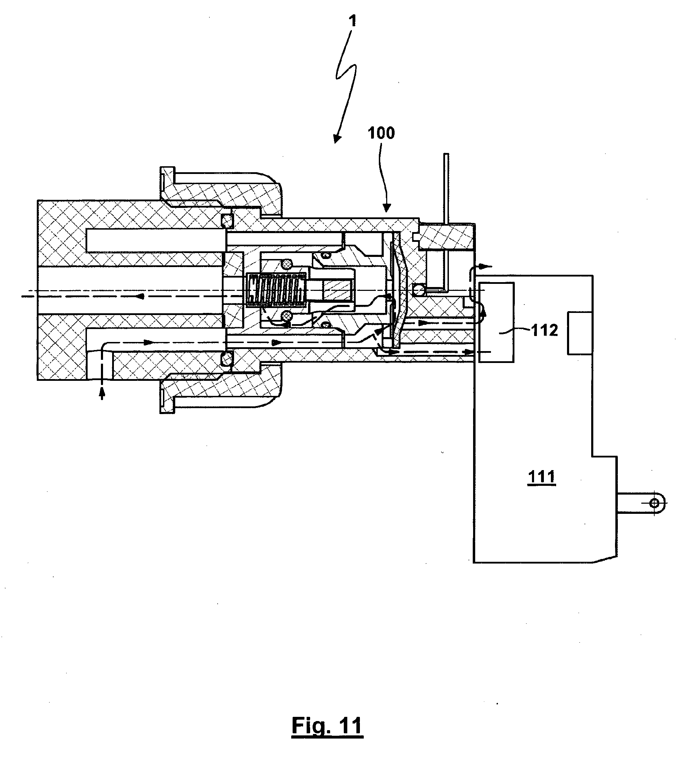

Während grundsätzlich möglich ist, dass in einer Feldspritzeinrichtung einem Agrarspritzen-Überströmventil 1 gemäß den Fig. 1 bis 6 ein aktiv gesteuertes Ventil vorgeordnet ist, beispielsweise der Zuführleitung 5 vorgeordnet ist oder der Abführleitung 6 nachgeordnet ist, ist in den Fig. 7 bis 11 eine weitere Ausgestaltung des Agrarspritzen-Überströmventils 1 dargestellt, in welches unmittelbar ein aktiv gesteuertes Ventil 100 integriert ist. Dieses aktiv gesteuerte Ventil 100 ist in eine fluidische Verbindung 101 mit einem Eingang 116 und einem Ausgang 117 zwischen dem Zuführkanal 5 und dem Druckraum 21 zwischengeschaltet und besitzt einen geschlossenen Schaltzustand gemäß Fig. 7, in welchem der Übertritt von Fluid in der fluidischen Verbindung 101 von dem Eingang 116 zu dem Ausgang 117 gesperrt ist, sowie einen geöffneten Schaltzustand gemäß Fig. 10 und 11, in welchem die fluidische Verbindung 101 für einen Übertritt von Fluid von dem Eingang 116 zu dem Ausgang 117 freigegeben ist.

Für diese Ausgestaltung besitzt das erste Innenteil 46 abweichend zu der Ausgestaltung gemäß Fig. 1 bis 6 nicht die Radialbohrungen 49, 50 zur unmittelbaren Verbindung de Zuführleitung 5 mit dem Druckraum 21. In diesem Fall trägt der Bund 47 des ersten Innenteils 46 radial außenliegend unter Abdichtung auf der der Halterung 2 abgewandten Seite eine Membran 102. Die Membran 102 tritt radial innenliegend in Wechselwirkung mit einem von dem ersten Innenteil 46 ausgebildeten Ventilsitz 103, der über eine Durchgangsbohrung 104 mit dem Druckraum 21 verbunden ist. Auf der dem Ventilsitz 103 gegenüber liegenden Seite der Membran 102 befindet sich ein Druckraum 105, der von der Membran 102 und dem Gehäuse 14 begrenzt ist. In den Druckraum 105 mündet eine Vorsteuerleitung 106, welche auf der dem Druckraum 105 abgewandten Seite in einer Schnittstelle 107 endet. Ebenfalls in die Schnittstelle 107 mündet eine Bypassleitung 108. Die Bypassleitung 108 zweigt von der Zuführleitung 5 ab und umgeht radial außenliegend die Membran 102. Schließlich mündet in die Schnittstelle 107 auch eine Auslassleitung 109, die mit einem Auslass 110 verbunden ist. An die Schnittstelle 107 angeflanscht ist ein Vorsteuermodul 111, in welchem ein Vorsteuerventil 112 angeordnet ist, welches als 3/2-Wegeventil 113 ausgebildet ist. In einer ersten Schaltstellung, die in Fig. 7 wirksam ist und vorzugsweise stromlos von dem Vorsteuerventil 112 eingenommen wird, verbindet das Vorsteuerventil 112 die Bypassleitung 108 und damit die Zuführleitung 5 mit der Vorsteuerleitung 106 und damit dem Druckraum 105, während die Auslassleitung 109 abgesperrt ist. Hingegen verbindet das Vorsteuerventil 112 in einer zweiten Schaltstellung, vorzugsweise einer bestromten Schaltstellung, entsprechend Fig. 10 und 11 die Vorsteuerleitung 106 mit der Auslassleitung 109, also den Druckraum 105 mit dem Auslass 110, während die Bypassleitung 108 abgesperrt ist. Das Vorsteuermodul 111 kann einen geeigneten Anschluss für eine elektrische Ansteuerung und/oder Leistungsversorgung besitzen. Vorzugsweise ist in das Vorsteuermodul 111 eine elektronische Steuereinheit integriert, welche für die Ansteuerung des Vorsteuerventils 112 verantwortlich ist. Diese Steuereinheit kann auch über eine elektrische Schnittstelle auf übermittelte Signale eines Fahrers und/oder auf automatisch erzeugte Signale einer anderen Steuereinheit reagieren.

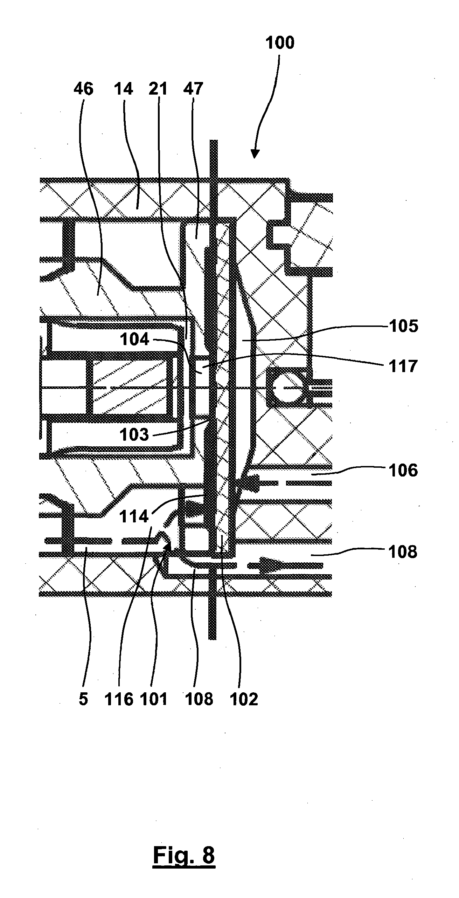

Die Funktionsweise des aktiv gesteuerten Ventils 100 ist wie folgt: In der in Fig. 7 und 8 wirksamen Schaltstellung des Vorsteuerventils 112 liegt an der Membran 102 in dem Druckraum 105 der Druck der Zuführleitung 5 an, der dem Druckraum 105 über den Bypasskanal 108, das Vorsteuerventil 112 und die Vorsteuerleitung 106 zugeführt wird. Hierdurch wird eine fluidische Kraft auf die Membran 102 ausgeübt, welche die Membran 102 auf den Ventilsitz 103 presst. Der Druck, der in dem Druckraum 21 und der Durchgangsbohrung 104 herrscht und auf der dem Druckraum 105 abgewandten Seite auf die Membran 102 wirkt, führt zu einer kleineren Druckkraft, was zur Folge hat, dass das aktiv gesteuerte Ventil 100 den geschlossenen Schaltzustand einnimmt, so dass ein Übertritt von Fluid von der Zuführleitung 5 zu dem Druckraum 21 nicht möglich ist. Wird hingegen das Vorsteuerventil 112 so umgeschaltet, dass dieses die Bypassleitung 108 absperrt, aber die Vorsteuerleitung 106 mit der Auslassleitung 109 verbindet, wird über den Auslass 110 der Druck in dem Druckraum 105 so abgesenkt, dass der an der Membran an einer Ringfläche 114 anstehende Druck der Zuführleitung 5 die Membran 102 von dem Ventilsitz 103 abheben kann, womit der in Fig. 10 und 11 zu erkennende Übertrittsquerschnitt 115 geschaffen wird, über welchen das Fluid von der Zuführleitung 5 durch die Durchgangsbohrung 104 in den Druckraum 21 gelangen kann. Das aktiv gesteuerte Ventil 100 nimmt somit für diese Stellung des Vorsteuerventils 112 seine geöffnete Stellung ein. In dieser geöffneten Stellung können die Bauelemente des Agrarspritzen-Überströmventils 1, wie diese für die Fig. 1 bis 5 beschrieben worden sind, entsprechend zur Wirkung kommen.

Alternativ zu der Umgehung der Membran über die Bypassleitung 108, die radial außen liegend an der Membran 102 vorbeigeführt ist, kann auch die Membran 102 mit einer Ausnehmung oder Durchgangsbohrung ausgestattet sein, durch welche das Fluid hindurchgeführt ist, wie dies insbesondere in DE 10 2010 001 881.3-23 offenbart ist.

Die Bewegung und Verformung der Membran 102 hat zur Folge, dass sich das Volumen des Druckraums 105 verändert. Die Veränderung des Volumens des Druckraums 105 geht einher mit einem Ausschieben von Fluid aus dem Druckraum 105 über die Vorsteuerleitung 106 und das Vorsteuerventil 112 und die Auslassleitung 109 zu dem Auslass 110, wo das Fluid dann in die Umgebung abgegeben wird. Kehrt das aktiv gesteuerte Ventil 100 hingegen wieder in die geschlossene Stellung gemäß Fig. 7 zurück mit einer entsprechenden Rückbewegung der Membran 102, hat dies eine Vergrößerung des Volumens des Druckraums 105 zur Folge. Da die Vorsteuerleitung 106 durch das Vorsteuerventil 112 abgesperrt ist, kann nicht aus der Auslassleitung 109 Fluid zurück gesaugt werden. Vielmehr geht die Vergrößerung des Volumens des Druckraums 105 einher mit der Zufuhr von Fluid aus der Zuführleitung 5 und der Bypassleitung 108 zu dem Druckraum 105. Wiederholtes abwechselndes Umschalten des Vorsteuerventils 112 führt letztendlich dazu, dass das Fluid sukzessive den Druckraum 105 durchspült und das spülende Fluid über den Auslass 110 abführt.

### BEZUGSZEICHENLISTE

- 1: Agrarspritzen-Überströmventil
- 2: Halterung
- 3: Zuführanschluss
- 4: Abführanschluss
- 5: Zuführleitung
- 6: Abführleitung
- 7: Stirnseite
- 8: Schnittstelle
- 9: Primärleitung
- 10: Sekundärleitung
- 11: O-Dichtring
- 12: Dichtscheibe
- 13: Gehäuse
- 14: Gehäuse
- 15: Außengewinde
- 16: Absatz
- 17: Überwurfmutter
- 18: Stirnseite
- 19: Innenraum
- 20: Ventilkörper
- 21: erster Druckraum
- 22: zweiter Druckraum
- 23: Innenfläche
- 24: Innenfläche
- 25: Absatz
- 26: Fase
- 27: Innengewinde
- 28: Verdickung
- 29: Dichtelement
- 30: Länge
- 31: Mantelfläche
- 32: Ringspalt

- 33: Nuten
- 34: Nuten
- 35: Länge
- 36: Bohrung
- 37: Permanentmagnet
- 38: Druckfeder
- 39: Gehäusewandung
- 40: Bohrung
- 41: Außenteil
- 42: Seitenschenkel
- 43: Seitenschenkel
- 44: Grundschenkel
- 45: Sacklochbohrung
- 46: erstes Innenteil
- 47: Bund
- 48: Ringspalt
- 49: Radialbohrung
- 50: Radialbohrung
- 51: Ansatz
- 52: Ringspalt
- 53: zweites Innenteil
- 54: Nut
- 55: Nut
- 56: Dichtelement
- 57: Aufnehmer
- 58: Sensor
- 59: Ausgangsleitung
- 60: zweite Kolbenfläche
- 61: erste Kolbenfläche
- 62: Drossel
- 63: Steuerkante
- 64: Begrenzung
- 65: Öffnungsquerschnitt, Volumenstrom
- 66: Differenzdruck

- 67: Schwellenwert
- 68: Druck
- 69: Druck
- 70: Druck
- 71: Wiegekolben
- 72: Filterelement
- 73: erster Öffnungsquerschnitt
- 74: zweiter Öffnungsquerschnitt
- 75: Volumenstrom
- 76: Finger
- 100: aktiv gesteuertes Ventil
- 101: fluidische Verbindung
- 102: Membran
- 103: Ventilsitz
- 104: Durchgangsbohrung
- 105: Druckraum
- 106: Vorsteuerleitung
- 107: Schnittstelle
- 108: Bypassleitung
- 109: Auslassleitung
- 110: Auslass
- 111: Vorsteuermodul
- 112: Vorsteuerventil
- 113: 3/2-Wegeventil
- 114: Ringfläche
- 115: Übertrittsquerschnitt
- 116: Eingang
- 117: Ausgang

## Patentansprüche

1. Agrarspritzen-Überströmventil (1) zur passiven Steuerung des Volumenstroms eines auszubringenden agraren Fluids von einer Primärleitung (9) über einen Übertrittsquerschnitt zu einer Sekundärleitung, wobei die Größe und/oder Geometrie des Übertrittsquerschnitts von der Stellung eines Ventilkörpers (20) abhängig ist, wobei der Ventilkörper (20) mit einem Wiegekolben (71) gebildet ist, der eine erste Kolbenfläche (61) besitzt, welche permanent mit dem Druck in der Primärleitung (9) beaufschlagt ist, und eine entgegengesetzt zu der ersten Kolbenfläche (61) wirkende zweite Kolbenfläche (60) besitzt, welche permanent mit dem Druck in der Sekundärleitung (10) beaufschlagt ist, so dass die Stellung des Ventilkörpers (20) und damit die Größe und/oder Geometrie des Übertrittsquerschnitts von einem Differenzdruck in der Primärleitung (9) und der Sekundärleitung (10) abhängig ist, **dadurch gekennzeichnet, dass** ein Sensor (58) die Position des Ventilkörpers (20) erfasst.

2. Agrarspritzen-Überströmventil (1) nach Anspruch 1, **dadurch gekennzeichnet, dass** der Übertrittsquerschnitt zwischen der Primärleitung (9) und der Sekundärleitung (10) von einer Drossel (62) gebildet ist, deren Drosselcharakteristik von der Stellung des Ventilkörpers (20) abhängig ist.

3. Agrarspritzen-Überströmventil (1) nach Anspruch 1 oder 2, **dadurch gekennzeichnet, dass** das Agrarspritzen-Überströmventil (1)
a) eine Schließstellung besitzt, in der die Primärleitung (9) gegenüber der Sekundärleitung (10) abgesperrt ist,
b) eine erste Öffnungsstellung besitzt, in der die Primärleitung (9) über einen ersten Öffnungsquerschnitt (73) mit der Sekundärleitung (10) verbunden ist,
c) eine zweite Öffnungsstellung besitzt, in der die Primärleitung (9) über einen zweiten Öffnungsquerschnitt (74) mit der Sekundärleitung (10) verbunden ist, wobei der zweite Öffnungsquerschnitt (74) größer ist als der erste Öffnungsquerschnitt (73),
d) wobei die Veränderung von der ersten Öffnungsstellung zu der zweiten Öffnungsstellung infolge des Wiegekolbens (71) mit einer Vergrößerung der Differenzdruck (66) zwischen der Primärleitung (9) und der Sekundärleitung (10) erfolgt.

4. Agrarspritzen-Überströmventil (1) nach Anspruch 3, **dadurch gekennzeichnet, dass** der erste Öffnungsquerschnitt (73) oder die Drossel (62) hohlzylinderförmig oder mit einem Strömungskanal ausgebildet ist.

5. Agrarspritzen-Überströmventil (1) nach Anspruch 4, **dadurch gekennzeichnet, dass** die Länge (30) des hohlzylinderförmigen ersten Öffnungsquerschnitts (73); oder des Strömungskanals oder der Drossel (62) in Abhängigkeit des Differenzdrucks zwischen der Primärleitung (9) und der Sekundärleitung (10) veränderbar ist.

6. Agrarspritzen-Überströmventil (1) nach einem der Ansprüche 3 bis 5, **dadurch gekennzeichnet, dass** das Agrarspritzen-Überströmventil (1) in der Schließstellung verbleibt, bis ein Schwellenwert (67) eines Differenzdrucks (66) zwischen der Primärleitung (9) und der Sekundärleitung (10) mit einem Druckgefälle in Richtung der Sekundärleitung (10) überschritten wird.

7. Agrarspritzen-Überströmventil (1) nach einem der vorhergehenden Ansprüche, **dadurch gekennzeichnet, dass** der Sensor (58) ein Reed-Sensor ist.

8. Feldspritzeinrichtung mit mindestens einem Agrarspritzen-Überströmventil (1) nach einem der Ansprüche 1 bis 7.

9. Feldspritzeinrichtung nach Anspruch 8, **dadurch gekennzeichnet, dass** eine Auswerteeinrichtung vorhanden ist, welche über eine Steuerlogik verfügt, die aus dem Signal des Sensors (58) bestimmt, ob eine dem Agrarspritzen-Überströmventil (1) nachgeschaltete Düse oder ein anderweitiges nachgeschaltetes fluidisches Bauelement ordnungsgemäß arbeitet.

10. Feldspritzeinrichtung nach Anspruch 8 oder 9 oder Agrarspritzen-Überströmventil (1) nach einem der Ansprüche 1 bis 7, mit
a) einem aktiv gesteuerten Ventil (100), bei welchem
aa) in einem geschlossenen Schaltzustand ein Ventilkörper eine fluidische Verbindung (101) sperrt, und
ab) in einem geöffneten Schaltzustand der Ventilkörper die fluidische Verbindung (101) freigibt,
b) einem elektromagnetischen Vorsteuerventil (112), welches Schaltstellungen besitzt, in welchen ein Druckraum (105) mit unterschiedliche Druckniveaus beaufschlagbar ist,
c) wobei der Druckraum (105) durch den Ventilkörper begrenzt ist, eine Veränderung des Druckniveaus in dem Druckraum (105) das Öffnungs- und Schließverhalten des aktiv gesteuerten Ventils (100) beeinflusst und eine Verschiebung des Ventilkörpers mit einer Herbeiführung des geöffneten Schaltzustands des aktiv gesteuerten Ventils (100) eine Veränderung des Volumens des Druckraums (105) zur Folge hat,
d) das elektromagnetische Vorsteuerventil (112)
da) in einer ersten Schaltstellung den Druckraum (105) mit einem Eingang (116) der fluidischen Verbindung (101) verbindet und
db) in einer zweiten Schaltstellung den Druckraum (105) mit einem Auslass (110) verbindet und
e) in der zweiten Schaltstellung des Vorsteuerventils (112) veranlasst durch eine Verschiebung des Ventilkörpers mit einer Überführung des aktiv gesteuerten Ventils (100) in den geöffneten Schaltzustand und durch eine hiermit einhergehende Veränderung des Volumens des Druckraums (105) Fluid aus dem Druckraum (105) zu dem Auslass (110) förderbar ist.

11. Feldspritzeinrichtung oder Agrarspritzen-Überströmventil (1) nach Anspruch 10, **dadurch gekennzeichnet, dass** das elektromagnetische Vorsteuerventil (112) ein 3/2-Wegeventil (113) ist.

12. Feldspritzeinrichtung oder Agrarspritzen-Überströmventil (1) nach Anspruch 10 oder 11, **dadurch gekennzeichnet, dass** das elektromagnetische Vorsteuerventil (112) stromlos in der ersten Schaltstellung ist.

13. Feldspritzeinrichtung oder Agrarspritzen-Überströmventil (1) nach einem der Ansprüche 10 bis 12, **dadurch gekennzeichnet, dass** das aktiv gesteuerte Ventil (100) ein Sitzventil ist.

14. Feldspritzeinrichtung oder Agrarspritzen-Überströmventil (1) nach Anspruch 13, **dadurch gekennzeichnet, dass** der Ventilkörper mit einer Membran (102) gebildet ist.

15. Feldspritzeinrichtung oder Agrarspritzen-Überströmventil (1) nach Anspruch 14, **dadurch gekennzeichnet, dass** der Eingang (116) der fluidischen Verbindung (101) über eine Ausnehmung oder einen Bypass (Bypassleitung) der Membran (102) mit dem Vorsteuerventil (112) verbunden ist.

16. Feldspritzeinrichtung oder Agrarspritzen-Überströmventil (1) nach einem der vorhergehenden Ansprüche, **dadurch gekennzeichnet, dass** eine Steuereinheit vorgesehen ist, die
a) über eine Steuerleitung mit dem elektromagnetischen Vorsteuerventil verbunden ist,
b) mit Steuerungslogik ausgestattet ist, über die das elektromagnetische Vorsteuerventil (112) in einem Spülmodus wiederholt zwischen der ersten und der zweiten Schaltstellung hin- und herschaltbar ist.

## Claims

1. Overflow valve (1) for an agricultural spraying device for the passive control of the volumetric flow of an agricultural fluid to be output from a primary line (9) via a transfer cross section to a secondary line wherein the size and/or geometry of the transfer cross section depends on the position of a valve body (20) and the valve body (20) is built with a balanced piston (71) having a first piston surface (61) which is permanently biased by the pressure in the primary line (9) and with a second piston surface (60) acting opposite to the first piston surface (61) wherein the second piston surface (60) is permanently biased by the pressure in the secondary line (10) such that the position of the valve body (20) and accordingly the size and/or geometry of the transfer cross section depends on the pressure difference in the primary line (9) and the secondary line (10), **characterised by** a sensor (58) sensing the position of the valve body (20).

2. Overflow valve (1) for an agricultural spraying device of claim 1, wherein the transfer cross section between the primary line (9) and the secondary line (10) is built by a throttle (62) wherein the throttle characteristic of the throttle (62) depends from the position of the valve body (20).

3. Overflow valve (1) for an agricultural spraying device of claim 1 or 2, wherein the overflow valve (1) for the agricultural spraying device
a) comprises a closed position wherein the primary line (9) is isolated from the secondary line (10),
b) comprises a first open position wherein the primary line (9) is connected by a first opening cross section (73) with the secondary line (10),
c) comprises a second open position wherein the primary line (9) is connected by a second opening cross section (74) with the secondary line (10) wherein the second opening cross section (74) is larger than the first opening cross section (73),
d) wherein the change from the first open position to the second open position is effected by the balanced piston (71) with an increase of the difference pressure (66) between the primary line (9) and the secondary line (10).

4. Overflow valve (1) for an agricultural spraying device of claim 3, wherein the first opening cross section (73) or the throttle (62) is formed in the shape of a hollow cylinder or with a streaming channel.

5. Overflow valve (1) for an agricultural spraying device of claim 4, wherein the length (30) of the first opening cross section (73) having the shape of an hollow cylinder or of the streaming channel or the throttle (62) can be changed in dependence from the difference pressure between the primary line (9) and the secondary line (10).

6. Overflow valve (1) for an agricultural spraying device of one of claims 3 to 5, wherein the overflow valve (1) for the agricultural spraying device remains in the closed state until a threshold value (67) of the difference pressure (66) between the primary line (9) and the secondary line (10) with a pressure decrease in the direction of the secondary line (10) is exceeded.

7. Overflow valve (1) for an agricultural spraying device of one of claims 1 to 6, wherein the sensor (58) is a reed-sensor.

8. Field spraying device with at least one overflow valve (1) for an agricultural spraying device of one of claims 1 to 7.

9. Field spraying device of claim 8, wherein an evaluating device is provided which comprises control logic which determines from the signal of the sensor (58) if a nozzle located downstream from the overflow valve (1) or another fluidic component located downstream thereof works properly.

10. Field spraying device of claim 8 or 9 or overflow valve (1) for an agricultural spraying device of one of claims 1 to 7 with
a) an actively controlled valve (100), wherein
aa) in a closed switching state a valve body blocks a fluidic connection (101), and
ab) in an open switching state the valve body opens the fluidic connection (101),
b) a solenoid pilot valve (112) which comprises switching positions in which a pressure chamber (105) can be biased with different pressure levels,
c) wherein the pressure chamber (105) is limited by the valve body, a change of the pressure level in the pressure chamber (105) influences the opening and closing behaviour of the actively controlled valve (100) and a displacement of the valve body with the effect of an open switching state of the actively controlled valve (100) results in a change of the volume of the pressure chamber (105),
d) wherein the solenoid pilot valve (102)
da) in a first switching position connects the pressure chamber (105) with an inlet (116) of the fluidic connection (101) and
db) in a second switching position connects the pressure chamber (105) with an outlet (110) and
e) wherein in the second switching state of the pilot valve (112) it is possible to supply fluid from the pressure chamber (105) to the outlet (110) caused by a displacement of the valve body with a transfer of the actively controlled valve (100) into the open switching state and by a simultaneous change of the volume of the pressure chamber (105).

11. Field spraying device or overflow valve (1) for an agricultural spraying device of claim 10, wherein the solenoid pilot valve (112) is a 3/2-way valve (113).

12. Field spraying device or overflow valve (1) for an agricultural spraying device of claim 10 or 11, wherein the solenoid pilot valve (112) is in the first switching position when not energised.

13. Field spraying device or overflow valve (1) for an agricultural spraying device of one of claims 10 to 12, wherein the actively controlled valve (100) is a seat-valve.

14. Field spraying device or overflow valve (1) for an agricultural spraying device of claim 13, wherein the valve body is built with a membrane (102).

15. Field spraying device or overflow valve (1) for an agricultural spraying device of claim 14, wherein the inlet (116) of the fluidic connection (101) is connected with the pilot valve (112) via a recess or bypass (bypass line) of the membrane (102).

16. Field spraying device or overflow valve (1) for an agricultural spraying device of one of claims 1 to 15, wherein a control unit is provided, which
a) is connected by a control line with the solenoid pilot valve,
b) comprises control logic by which it is possible to switch the solenoid pilot valve (112) in a flashing state alternating between a first and second switching position.

## Revendications

1. Soupape de trop-plein pour pulvérisation agricole (1), pour la commande passive du débit volumique d'un fluide agricole par une conduite primaire (9), par l'intermédiaire d'une section de passage vers une conduite secondaire, la taille et/ou la géométrie de la section de passage dépendant de la position d'un corps de soupape (20), le corps de soupape (20) étant constitué d'un piston de pesage (71) présentant une première surface de piston (61), soumise en permanence à la pression dans la conduite primaire (9), et une deuxième surface de piston (60) exerçant une action opposée à la première surface de piston (61), qui est soumise en permanence à la pression dans la conduite secondaire (10), de façon à ce que la position du corps de soupape (20), et donc la taille et/ou la géométrie de la section de passage, dépende d'une pression différentielle dans la conduite primaire (9) et la conduite secondaire (10), **caractérisée en ce qu'**un capteur (58) détecte la position du corps de soupape (20).

2. Soupape de trop-plein pour pulvérisation agricole (1), selon la revendication 1, **caractérisée en ce que** la section de passage entre la conduite primaire (9) et la conduite secondaire (10) est constituée d'un étranglement (62) dont la caractéristique dépend de la position du corps de soupape (20).

3. Soupape de trop-plein pour pulvérisation agricole (1), selon la revendication 1 ou 2, **caractérisée en ce que** la soupape de trop-plein pour pulvérisation agricole (1) :
a) présente une position de fermeture dans laquelle la conduite primaire (9) est séparée de la conduite secondaire (10),
b) présente une première position d'ouverture dans laquelle la conduite primaire (9) est reliée à la conduite secondaire (10) par l'intermédiaire d'une première section d'ouverture (73),
c) présente une deuxième position d'ouverture dans laquelle la conduite primaire (9) est reliée à la conduite secondaire (10) par l'intermédiaire d'une deuxième section d'ouverture (74), la deuxième section d'ouverture (74) étant supérieure à la première section d'ouverture (73),
d) le passage de la première position d'ouverture à la deuxième position d'ouverture a lieu, à la suite du piston de pesage (71), avec une augmentation de la pression différentielle (66) entre la conduite primaire (9) et la conduite secondaire (10).

4. Soupape de trop-plein pour pulvérisation agricole (1) selon la revendication 3, **caractérisée en ce que** la première section d'ouverture (73) ou l'étranglement (62) présente la forme d'un cylindre creux ou est constitué d'un canal d'écoulement.

5. Soupape de trop-plein pour pulvérisation agricole (1) selon la revendication 4, **caractérisée en ce que** la longueur (30) de la première section d'ouverture (73) en forme de cylindre creux ; ou du canal d'écoulement ou de l'étranglement (62) varie en fonction de la pression différentielle entre la conduite primaire (9) et la conduite secondaire (10).

6. Soupape de trop-plein pour pulvérisation agricole (1) selon l'une des revendications 3 à 5, **caractérisée en ce que** la soupape de trop-plein pour pulvérisation agricole (1) reste dans la position de fermeture jusqu'à ce qu'une valeur de seuil (67) d'une pression différentielle (66) entre la conduite primaire (9) et la conduite secondaire (10) soit dépassée avec une chute de pression en direction de la conduite secondaire (10).

7. Soupape de trop-plein pour pulvérisation agricole (1) selon l'une des revendications précédentes, **caractérisée en ce que** le capteur (58) est un capteur Reed.

8. Dispositif de pulvérisation de champ avec au moins une soupape de trop-plein pour pulvérisation agricole (1) selon l'une des revendications 1 à 7.

9. Dispositif de pulvérisation de champ selon la revendication 8, **caractérisé en ce qu'**un dispositif d'analyse est prévu, qui disposé d'une logique de commande qui détermine, à partir du signal du capteur (58), si une buse branchée en aval de la soupape de trop-plein pour pulvérisation agricole (1) ou un autre composant fluidique branché en aval fonctionne correctement.

10. Dispositif de pulvérisation de champ selon la revendication 8 ou 9 ou soupape de trop-plein pour pulvérisation agricole (1), selon l'une des revendications 1 à 7, avec
a) une soupape (100) commandée de manière active, dans laquelle
aa) dans un état d'enclenchement fermé, un corps de soupape bloque une liaison fluidique (101), et
ab) dans un état d'enclenchement ouvert, le corps de soupape libère la liaison fluidique (101),
b) une soupape pilote électromagnétique (112) qui présente des positions d'enclenchement dans lesquelles une chambre de pression (105) peut être soumise à différents niveaux de pression,
c) la chambre de pression (105) est limitée par le corps de soupape, une variation du niveau de pression dans la chambre de pression (105) provoque le comportement d'ouverture et de fermeture de la soupape (100) commandée activement et un déplacement du corps de soupape, avec une activation de l'état d'enclenchement ouvert de la soupape (100) commandée activement, provoque une variation du volume de la chambre de pression (105),
d) la soupape pilote électromagnétique (112)
da) relie, dans une première position d'enclenchement, la chambre de pression (105) avec une entrée (116) de la liaison fluidique (101) et
db) relie, dans une deuxième position d'enclenchement, la chambre de pression (105) avec une sortie (110) et
e) dans la deuxième position d'enclenchement de la soupape pilote (112), provoque, grâce à un déplacement du corps de soupape avec un passage de la soupape commandée activement (100) dans l'état d'enclenchement ouvert et à une variation ainsi provoquée du volume de la chambre de pression (105), le transport du fluide de la chambre de pression (105) vers la sortie (110).

11. Dispositif de pulvérisation de champ ou soupape de trop-plein pour pulvérisation agricole (1), selon la revendication 10, **caractérisé en ce que** la soupape pilote électromagnétique (112) est une soupape 3/2 voies (113).

12. Dispositif de pulvérisation de champ ou soupape de trop-plein pour pulvérisation agricole (1), selon la revendication 10 ou 11, **caractérisé en ce que** la soupape pilote électromagnétique (112) est hors tension dans la première position d'enclenchement.

13. Dispositif de pulvérisation de champ ou soupape de trop-plein pour pulvérisation agricole (1), selon l'une des revendications 10 à 12, **caractérisé en ce que** la soupape (100) commandée activement est une soupape à siège.

14. Dispositif de pulvérisation de champ ou soupape de trop-plein pour pulvérisation agricole (1), selon la revendication 13, **caractérisé en ce que** le corps de soupape est constitué d'une membrane (102).

15. Dispositif de pulvérisation de champ ou soupape de trop-plein pour pulvérisation agricole (1), selon la revendication 14, **caractérisé en ce que** l'entrée (116) de la liaison fluidique (101) est reliée à la soupape pilote (112) par l'intermédiaire d'un évidement ou d'un bypass (conduite de dérivation) de la membrane (102).

16. Dispositif de pulvérisation de champ ou soupape de trop-plein pour pulvérisation agricole (1), selon l'une des revendications précédente, **caractérisé en ce qu'**une unité de commande est prévue, qui
a) est reliée à la soupape pilote électromagnétique par l'intermédiaire d'une conduite de commande,
b) est équipée d'une logique de commande permettant d'enclencher la soupape pilote électromagnétique (112) de manière répétitive, dans un mode de rinçage, entre la première et la deuxième position d'enclenchement.
